# EUROPEAN PATENT SPECIFICATION

(11) **EP 4 524 854 B1**
(45) Date of publication and mention of the grant of the patent: **11.11.2026**
(21) Application number: 24197327.0
(22) Date of filing: 29.08.2024
(51) Int. Cl.: G06Q 10/08, B25J 9/16, B60W 50/02, B61L 27/57, G01M 17/007, G06Q 10/20, G06V 20/56, G06V 20/59, G07C 5/00, G07C 5/08

(54) **INSPECTION SYSTEM, SERVER DEVICE, AND INSPECTION METHOD**
INSPEKTIONSSYSTEM, SERVERGERÄT UND INSPEKTIONSVERFAHREN
SYSTÈME D'INSPECTION, DISPOSITIF SERVEUR ET PROCÉDÉ D'INSPECTION

(30) Priority: 13.09.2023 JP 2023148035
(43) Date of publication of application: 19.03.2025
(73) Proprietor: TOYOTA JIDOSHA KABUSHIKI KAISHA, Aichi-ken, 471-8571 (JP)
(72) Inventor: IWAHORI, Kento, Toyota-shi, 471-8571 (JP); YOKOYAMA, Daiki, Toyota-shi, 471-8571 (JP); YASUYAMA, Shogo, Toyota-shi, 471-8571 (JP)
(74) Representative: J A Kemp LLP

(56) References cited:
- US-A1- 2021 122 362
- US-A1- 2022 032 955
- US-A1- 2023 109 606

## Description

### BACKGROUND OF THE INVENTION

### 1. Field of the Invention

The present disclosure relates to an inspection system, a server device, and an inspection method.

### 2. Description of Related Art

Japanese Unexamined Patent Application Publication (Japanese Translation of PCT Application) No. 2017-538619 (JP 2017-538619 A) discloses a technique of causing a vehicle to travel autonomously or through remote control in a vehicle manufacturing process.
US 2021/122362 A1 discloses an automatic parking system. US 2023/0109606 Al discloses a vehicle control device, vehicle control method and vehicle control system.

### SUMMARY OF THE INVENTION

There is a desire for a technique of appropriately inspecting a movable body that is movable autonomously or through remote control, such as the vehicle described in JP 2017-538619 A.

The present disclosure is provided as the following aspects.
(1) An aspect of the present disclosure provides an inspection system of remotely or autonomously inspecting a mobile body that is movable through unattended operation. This inspection system includes: a processor. The processor is configured to generate and output a control instruction that causes the mobile body to operate; and configured to execute an abnormality process determined in advance in a case where a difference obtained by comparing at least two of physical quantities for the mobile body as a target is more than a criterion value determined in advance, the physical quantities including (i) a first physical quantity related to operation of the mobile body achieved according to the control instruction, the first physical quantity being calculated using the control instruction, (ii) a second physical quantity related to the operation, calculated using a result of a detection by an internal sensor mounted on the mobile body to detect a state of the mobile body, and (iii) a third physical quantity related to the operation, calculated using a result of a detection by an external sensor positioned outside the mobile body. With the inspection system according to this aspect, the abnormality process is executed in a case where the difference between at least two of physical quantities including the first physical quantity, the second physical quantity, and the third physical quantity related to the same operation is more than the criterion value, and thus it is possible to enhance the possibility that the inspection system appropriately inspects the mobile body through remote or autonomous inspection.
(2) The inspection system according to the above aspect may further include a server device including the processor and configured to transmit the control instruction to the mobile body from outside of the mobile body, and the abnormality process may include at least one of: a process of determining that there is an abnormality with at least one of the server device, a surrounding environment of the mobile body that performs the operation, the mobile body as the target, and the external sensor; a process of indicating occurrence of an abnormality; a process of transmitting the control instruction of braking the mobile body as the target from the server device to the mobile body as the target; a process of stopping the server device; and a process of stopping the external sensor.
(3) In the inspection system according to the above aspect, the processor may be configured to execute, as the abnormality process, a process of determining that there is an abnormality with at least one of the server device, the surrounding environment, and the mobile body as the target in a case where a first difference is more than a first criterion value determined in advance, the first difference representing a difference between the first physical quantity and the second physical quantity compared with each other for the mobile body as the target. With the inspection system according to this aspect, it is possible to determine that there is an abnormality with at least one of the server device, the surrounding environment, and the mobile body as the target in a case where the difference between the first physical quantity and the second physical quantity is more than the first criterion value.
(4) In the inspection system according to the above aspect, the processor may be configured to determine that there is an abnormality with at least one of the surrounding environment and the mobile body as the target in a case where a first condition determined in advance related to normality of the server device is met and the first difference is more than the first criterion value. With the inspection system according to this aspect, it is possible to determine that there is an abnormality with at least one of the surrounding environment and the mobile body as the target in a case where it is less probable that there is an abnormality with the server device and the difference between the first physical quantity and the second physical quantity is more than the criterion value.
(5) In the inspection system according to the above aspect, the first condition may include a condition that in a predetermined period a first number of times, when the first difference for a plurality of mobile bodies that are different from the mobile body as the target is more than the first criterion value, is equal to or less than a predetermined number of times.
(6) In the inspection system according to the above aspect, the first condition may include a condition that a first operation determined in advance, which excludes the server device from targets for an abnormality determination, is executed on a reception unit configured to receive an operation from a user.
(7) In the inspection system according to the above aspect, the processor may be configured to determine that there is an abnormality with at least one of the server device and the mobile body as the target in a case where a second condition determined in advance related to normality of the surrounding environment is met and the first difference is more than the first criterion value. With the inspection system according to this aspect, it is possible to determine that there is an abnormality with at least one of the server device and the mobile body as the target in a case where it is less probable that there is an abnormality with the surrounding environment and the difference between the first physical quantity and the second physical quantity is more than the criterion value.
(8) In the inspection system according to the above aspect, the second condition may include a second operation determined in advance, which excludes the surrounding environment from targets for an abnormality determination being executed on a reception unit configured to receive an operation from a user.
(9) In the inspection system according to the above aspect, the second condition may include a condition that the processor made determination that there is no abnormality with the surrounding environment by using a sensor that detects the surrounding environment.
(10) In the inspection system according to the above aspect, the processor may be configured to determine that there is an abnormality with at least one of the server device and the surrounding environment in a case where a third condition determined in advance related to normality of the mobile body as the target is met and the first difference is more than the first criterion value. With the inspection system according to this aspect, it is possible to determine that there is an abnormality with at least one of the server device and the surrounding environment in a case where it is less probable that there is an abnormality with the mobile body as the target and the difference between the first physical quantity and the second physical quantity is more than the criterion value.
(11) In the inspection system according to the above aspect, the third condition may include a condition that a third operation determined in advance, which excludes the mobile body as the target from targets for an abnormality determination, is executed on a reception unit configured to receive an operation from a user.
(12) In the inspection system according to the above aspect, the processor may be configured to execute, as the abnormality process, a process of determining that there is an abnormality with at least one of the internal sensor mounted on the mobile body as the target and the external sensor in a case where a second difference is more than a second criterion value determined in advance, the second difference being a difference between the second physical quantity and the third physical quantity compared with each other. With the inspection system according to this aspect, it is possible to determine that there is an abnormality with at least one of the internal sensor and the external sensor in a case where the difference between the second physical quantity and the third physical quantity is more than the criterion value.
(13) In the inspection system according to the above aspect, the processor may be configured to determine that there is an abnormality with the external sensor in a case where a fourth condition determined in advance related to normality of the internal sensor mounted on the mobile body as the target is met and the second difference is more than the second criterion value. With the inspection system according to this aspect, it is possible to determine that there is an abnormality with the external sensor in a case where it is less probable that there is an abnormality with the internal sensor and the difference between the second physical quantity and the third physical quantity is more than the criterion value.
(14) In the inspection system according to the above aspect, the fourth condition may include a condition that a fourth operation determined in advance, which excludes the internal sensor (161) from targets for an abnormality determination, is executed on a reception unit (90) configured to receive an operation from a user.
(15) In the inspection system according to the above aspect, the processor may be configured to determine that there is an abnormality with the internal sensor in a case where a fifth condition determined in advance related to normality of the external sensor is met and the second difference is more than the second criterion value. With the inspection system according to this aspect, it is possible to determine that there is an abnormality with the internal sensor in a case where it is less probable that there is an abnormality with the external sensor and the difference between the second physical quantity and the third physical quantity is more than the criterion value.
(16) In the inspection system according to the above aspect, the fifth condition may include a fifth operation determined in advance, which excludes the external sensor (301) from targets for an abnormality determination, is executed on a reception unit (90) configured to receive an operation from a user.
(17) In the inspection system according to the above aspect, the processor may be configured to execute, as the abnormality process, a process of determining that there is an abnormality with at least one of the server device, the surrounding environment, the mobile body as the target, and the external sensor in a case where a third difference is more than a third criterion value determined in advance, the third difference being a difference between the first physical quantity and the third physical quantity compared with each other. With the inspection system according to this aspect, it is possible to specify that there is an abnormality with at least one of the server device, the surrounding environment, the mobile body as the target, and the external sensor in a case where the difference between the first physical quantity and the third physical quantity is more than the criterion value.
(18) In the inspection system according to the above aspect, the processor may be configured to determine that there is an abnormality with at least one of the surrounding environment, the external sensor, and the mobile body as the target in a case where a first condition determined in advance related to normality of the server device is met and the third difference is more than the third criterion value. With the inspection system according to this aspect, it is possible to determine that there is an abnormality with at least one of the surrounding environment, the external sensor, and the mobile body as the target in a case where it is less probable that there is an abnormality with the server device and the difference between the first physical quantity and the third physical quantity is more than the criterion value.
(19) In the inspection system according to the above aspect, the first condition may include a condition that a first operation determined in advance, which excludes the server device from targets for an abnormality determination, is executed on a reception unit configured to receive an operation from a user.
(20) In the inspection system according to the above aspect, the processor may be configured to determine that there is an abnormality with at least one of the server device, the mobile body as the target, and the external sensor in a case where a second condition determined in advance related to normality of the surrounding environment is met and the third difference is more than the third criterion value. With the inspection system according to this aspect, it is possible to determine that there is an abnormality with at least one of the server device, the mobile body as the target, and the external sensor in a case where it is less probable that there is an abnormality with the surrounding environment and the difference between the first physical quantity and the third physical quantity is more than the criterion value.
(21) In the inspection system according to the above aspect, the second condition may include a condition that a second operation determined in advance, which excludes the surrounding environment from targets for an abnormality determination, is executed on a reception unit configured to receive an operation from a user.
(22) In the inspection system according to the above aspect, the second condition may include a condition that the processor made determination that there is no abnormality with the surrounding environment by using a sensor that detects the surrounding environment.
(23) In the inspection system according to the above aspect, the processor may be configured to determine that there is an abnormality with at least one of the server device, the surrounding environment, and the external sensor in a case where a third condition determined in advance related to normality of the mobile body as the target is met and the third difference is more than the third criterion value. With the inspection system according to this aspect, it is possible to determine that there is an abnormality with at least one of the server device, the surrounding environment, and the external sensor in a case where it is less probable that there is an abnormality with the mobile body as the target and the difference between the first physical quantity and the third physical quantity is more than the criterion value.
(24) In the inspection system according to the above aspect, the third condition may include a condition that a third operation determined in advance, which excludes the mobile body as the target from targets for an abnormality determination, is executed on a reception unit configured to receive an operation from a user.
(25) In the inspection system according to the above aspect, the processor may be configured to determine that there is an abnormality with at least one of the server device, the surrounding environment, and the mobile body as the target in a case where a fifth condition determined in advance related to normality of the external sensor is met and the third difference is more than the third criterion value. With the inspection system according to this aspect, it is possible to determine that there is an abnormality with at least one of the server device, the surrounding environment, and the mobile body as the target in a case where it is less probable that there is an abnormality with the external sensor and the difference between the first physical quantity and the third physical quantity is more than the criterion value.
(26) In the inspection system according to the above aspect, the fifth condition may include a condition that a fifth operation determined in advance, which excludes the external sensor from targets for an abnormality determination, is executed on a reception unit configured to receive an operation from a user.
(27) In the inspection system according to the above aspect, the processor may be configured to: execute a process of determining that there is an abnormality with the mobile body as the target in a case where a first difference is more than a first criterion value determined in advance, a second difference is more than a second criterion value determined in advance, and a third difference is equal to or less than a third criterion value determined in advance, the first difference being a difference between the first physical quantity and the second physical quantity compared with each other, more than the second difference being a difference between the second physical quantity and the third physical quantity compared with each other, and the third difference being a difference between the first physical quantity and the third physical quantity compared with each other; execute a process of determining that there is an abnormality with the server device in a case where the first difference is more than the first criterion value, the second difference is equal to or less than the second criterion value, and the third difference is more than the third criterion value; and execute a process of determining that there is an abnormality with the external sensor in a case where the first difference is equal to or less than the first criterion value, the second difference is more than the second criterion value, and the third difference is more than the third criterion value. With the inspection system according to this aspect, it is possible to specify which of the server device, the mobile body as the target, and the external sensor there is an abnormality with, using the first difference, the second difference, and the third difference.
(28) In the inspection system according to the above aspect, the external sensor may be an unattended operation sensor that is used to move the mobile body through unattended operation. With the inspection system according to this aspect, it is possible to use the unattended operation sensor as the external sensor that calculates the second physical quantity.

Besides the aspects as a system discussed above, the present disclosure can be implemented in aspects as a server device, an inspection method, a mobile body, a program for implementing the inspection method, a non-transitory storage medium storing the program, a program product, etc., for example. The program product may be provided as a storage medium storing the program, or may be provided as a program product that is distributable via a network, for example.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 illustrates the configuration of an inspection system according to a first embodiment;
FIG. 2A illustrates how a vehicle moves in a factory through unattended operation;
FIG. 2B is a flowchart of a first unattended operation process;
FIG. 3 is a flowchart of an inspection process according to the first embodiment;
FIG. 4 illustrates the configuration of an inspection system according to a second embodiment;
FIG. 5 is a flowchart of an inspection process according to the second embodiment;
FIG. 6 illustrates the configuration of an inspection system according to a third embodiment;
FIG. 7 is a flowchart of an inspection process according to the third embodiment;
FIG. 8 illustrates the configuration of an inspection system according to a fourth embodiment;
FIG. 9 is a flowchart of an inspection process according to the fourth embodiment;
FIG. 10 is a flowchart of a difference determination process according to the fourth embodiment;
FIG. 11 illustrates the configuration of an inspection system according to a fifth embodiment;
FIG. 12 is a flowchart of a second unattended operation process;
FIG. 13 is a flowchart of an inspection process according to the fifth embodiment;
FIG. 14 illustrates the configuration of an inspection system according to a sixth embodiment;
FIG. 15 is a flowchart of an inspection process according to the sixth embodiment;
FIG. 16 illustrates the configuration of an inspection system according to a seventh embodiment;
FIG. 17 is a flowchart of an inspection process according to the seventh embodiment;
FIG. 18 illustrates the configuration of an inspection system according to an eighth embodiment;
FIG. 19 is a flowchart of an inspection process according to the eighth embodiment; and
FIG. 20 is a flowchart of a difference determination process according to the eighth embodiment.

### DETAILED DESCRIPTION OF EMBODIMENTS

### A. First Embodiment

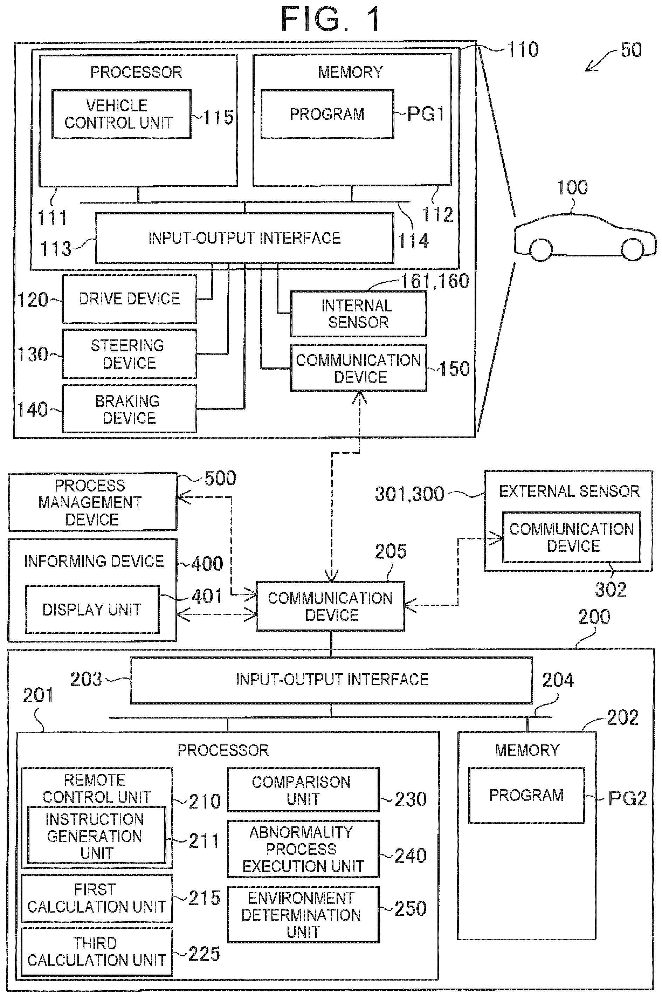

FIG. 1 illustrates the configuration of an inspection system 50 according to a first embodiment. The inspection system 50 is used for a remote or autonomous inspection of movable bodies that are movable through unattended operation in a factory that manufactures movable bodies. The remote or autonomous inspection of mobile bodies means an inspection of mobile bodies performed using remote control or autonomous control of the mobile bodies. In the following, a remote inspection of mobile bodies, that is, an inspection of mobile bodies performed using remote control of mobile bodies, will occasionally be referred to simply as a "remote inspection". Meanwhile, an autonomous inspection of mobile bodies, that is, an inspection of mobile bodies performed using autonomous control of mobile bodies, will occasionally be referred to simply as an "autonomous inspection". The inspection system 50 according to the present embodiment is constituted as an unattended operation system that moves a mobile body through unattended operation.

In the present embodiment, the mobile body is a vehicle 100. More specifically, the vehicle 100 is a battery electric vehicle (BEV). The mobile body is not limited to a battery electric vehicle, and may be a gasoline vehicle, a hybrid electric vehicle, or a fuel cell electric vehicle, for example. The mobile body may be a vehicle with wheels or a vehicle with an endless track, and may be any vehicle such as a passenger vehicle, a truck, a bus, a two-wheeled vehicle, a four-wheeled vehicle, a tank, and a construction vehicle, etc., for example. The mobile body is not limited to a vehicle, and may be an electric vertical take-off and landing aircraft (a so-called flying vehicle).

The term "unattended operation" used above means operation not based on driving operations by a passenger. The driving operations mean operations related to at least one of "traveling", "turning", and "stopping" of the vehicle 100. The unattended operation is achieved through automatic or manual remote control performed using a device provided external to the vehicle 100 or through autonomous control of the vehicle 100. A passenger that does not perform the driving operations may be on board the vehicle 100 that travels through the unattended operation. Examples of the passenger that does not perform the driving operations include a person simply seated on a seat of the vehicle 100 and a person that performs work different from the driving operations, such assembly, inspection, and operation of switches, while being on board the vehicle 100. Operation based on the driving operations by a passenger is occasionally referred to as "attended operation".

The inspection system 50 according to the present embodiment includes the vehicle 100 that is operable through remote control, a server device 200 that remotely controls the vehicle 100, an external sensor group 300 installed in the factory, an informing device 400, and a process management device 500 that manages manufacturing processes for the vehicle 100 in the factory.

The vehicle 100 includes a vehicle control device 110 that controls various units of the vehicle 100, a drive device 120 that accelerates the vehicle 100, a steering device 130 that changes the traveling direction of the vehicle 100, a braking device 140 that decelerates the vehicle 100, a communication device 150 that communicates with the server device 200 through wireless communication, and an internal sensor group 160. In the present embodiment, the drive device 120 includes a battery, a travel motor to be driven by electric power from the battery, and drive wheels to be rotated by the travel motor. The drive device 120, the steering device 130, and the braking device 140 each include an actuator that drives the vehicle 100. In the following, the various actuators included in the vehicle 100 will also be referred to as an actuator group. The actuator group may include an actuator that swings a wiper provided in the vehicle 100, an actuator that drives a door mirror provided in the vehicle 100, an actuator that opens and closes a power window provided in the vehicle 100, and an actuator that turns on various lamps (e.g. a headlamp) provided in the vehicle 100, for example.

The internal sensor group 160 includes at least one internal sensor 161. In FIG. 1, only one internal sensor 161 included in the internal sensor group 160 is illustrated. The internal sensor 161 is a sensor mounted on the vehicle 100. The internal sensor 161 detects a state of the vehicle 100 or a surrounding environment of the vehicle 100. Examples of the state of the vehicle 100 include a state of physical behavior of the vehicle 100. Examples of the state of physical behavior of the vehicle 100 include a motion state of the vehicle 100, such as a stationary state, a travel state, an acceleration state, a deceleration state, a straight travel state, and a turning state, a state of operation of the various units of the vehicle 100, etc. The internal sensor group 160 according to the present embodiment includes, as the internal sensor 161, a rotational speed sensor that measures the rotational speed of the travel motor, an acceleration sensor that measures the acceleration of the vehicle 100, a vehicle speed sensor that measures the speed of the vehicle 100, a yaw rate sensor that measures the yaw axis angular velocity (yaw rate) of the vehicle 100, a hydraulic sensor that measures a hydraulic pressure to be supplied to a brake of the braking device 140, etc. In other embodiments, the internal sensor group 160 may include, as the internal sensor 161, a camera or a Light Detection And Ranging (LiDAR), for example. The camera or the LiDAR as the internal sensor 161 may be used to detect the surrounding environment of the vehicle 100, for example.

The vehicle control device 110 is constituted by a computer that includes a processor 111, a memory 112, an input-output interface 113, and an internal bus 114. The processor 111, the memory 112, and the input-output interface 113 are connected so as to be bidirectionally communicable via the internal bus 114. The drive device 120, the steering device 130, the braking device 140, the communication device 150, and the internal sensor group 160 are connected to the input-output interface 113. A computer program PG1 is stored in the memory 112.

The processor 111 functions as a vehicle control unit 115 by executing the computer program PG1 stored in the memory 112. The vehicle control unit 115 controls an actuator group. In particular, the vehicle control unit 115 causes the vehicle 100 to travel by controlling the drive device 120, the steering device 130, and the braking device 140. When a driver is on board the vehicle 100, the vehicle control unit 115 can cause the vehicle 100 to travel by controlling the drive device 120, the steering device 130, and the braking device 140 according to an operation by the driver. The vehicle control unit 115 can cause the vehicle 100 to travel by controlling the drive device 120, the steering device 130, and the braking device 140 according to a travel control signal transmitted from the server device 200, irrespective of whether a driver is on board the vehicle 100.

The server device 200 is constituted by a computer that includes a processor 201, a memory 202, an input-output interface 203, and an internal bus 204. The processor 201, the memory 202, and the input-output interface 203 are connected so as to be bidirectionally communicable via the internal bus 204. A communication device 205 that communicates with the vehicle 100 through wireless communication is connected to the input-output interface 203. In the present embodiment, the communication device 205 can communicate with the external sensor group 300, the informing device 400, and the process management device 500 through wired communication or wireless communication.

The processor 201 functions as a remote control unit 210, a first calculation unit 215, a third calculation unit 225, a comparison unit 230, an abnormality process execution unit 240, and an environment determination unit 250 by executing a computer program PG2 stored in the memory 202.

The remote control unit 210 executes remote control of the vehicle 100 using information output from the external sensor group 300. In the present embodiment, the remote control unit 210 includes an instruction generation unit 211. The instruction generation unit 211 generates and outputs a control instruction for causing the vehicle 100 to operate.

The first calculation unit 215 calculates a first physical quantity. The third calculation unit 225 calculates a third physical quantity. The first calculation unit 215, the third calculation unit 225, the first physical quantity, and the third physical quantity will be discussed in detail later. In the following, the first physical quantity and the third physical quantity will also be referred to simply as "physical quantities" when the first physical quantity and the third physical quantity are not differentiated from a second physical quantity to be described in relation to a second embodiment.

The comparison unit 230 makes a comparison between the physical quantities calculated by the calculation units to calculate a difference between the physical quantities. The abnormality process execution unit 240 executes an abnormality process determined in advance when the difference between the physical quantities obtained as a result of the comparison made by the comparison unit 230 is more than a criterion value determined in advance. The abnormality process according to the present embodiment includes a determination process of determining that there is an abnormality with at least one of the server device 200, the vehicle 100, the external sensor 301, and the surrounding environment to be discussed later, and an informing process of causing the informing device 400 to announce the occurrence of the abnormality. The determination process and the informing process will be discussed in detail later. The environment determination unit 250 will be discussed in detail later.

The external sensor group 300 includes at least one external sensor 301. While the external sensor group 300 according to the present embodiment includes a plurality of external sensors 301, only one external sensor 301 included in the external sensor group 300 is illustrated in FIG. 1. The external sensor 301 is a sensor positioned outside the vehicle 100. The external sensor 301 detects a state of the vehicle 100 and a surrounding environment of the vehicle 100 from the outside of the vehicle 100. In the present embodiment, each external sensor 301 is constituted by a camera installed in the factory, and captures an image that includes the vehicle 100 from the outside of the vehicle 100. The captured image includes information obtained by optically grasping the outer shape of the vehicle 100, and represents the motion state of the vehicle 100 optically detected from the outside of the vehicle 100. Each external sensor 301 includes a communication device 302, and can communicate with the server device 200 through wired communication or wireless communication. Each external sensor 301 according to the present embodiment corresponds to an unattended operation sensor as a sensor to be used for unattended operation of the vehicle 100 as discussed later.

The informing device 400 informs a user of the inspection system 50 of the occurrence of an abnormality. The informing device 400 according to the present embodiment is constituted as a tablet terminal carried by a manager, and informs the user of various kinds of information including information related to the occurrence of an abnormality via a display unit 401 provided in the informing device 400. The display unit 401 according to the present embodiment is constituted as a touch panel (e.g. a liquid crystal display or an organic electroluminescence (EL) display) that is operable by touching, and also has a function as a reception unit that receives an operation from the user. The informing device 400 includes a communication device (not illustrated), and can communicate with the server device 200 through wired communication or wireless communication. In other embodiments, the informing device 400 may inform the user of the occurrence of an abnormality via a speaker in place of or in addition to the display unit 401, for example. The informing device 400 may be a display panel, a warning buzzer, or a warning lamp provided in the factory, or may be a display device or a speaker connected to the server device 200, for example.

The process management device 500 is a device that manages a manufacturing process for the vehicle 100 in the factory. The process management device 500 is constituted by at least one computer. The process management device 500 includes a communication device (not illustrated), and is communicable with the server device 200 and various pieces of equipment in the factory through wired communication or wireless communication. The process management device 500 communicates with various pieces of equipment in the factory to grasp when and where who is expected to perform what work on which vehicle 100, and when and where who has performed what work on which vehicle 100.

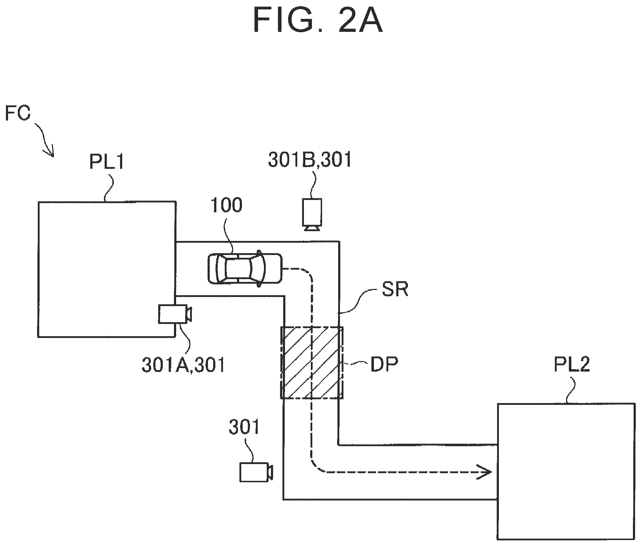

FIG. 2A illustrates how the vehicle 100 moves in a factory FC through unattended operation. The factory FC includes a first location PL1 at which first work is performed, a second location PL2 at which second work is performed, and an inspection location DP. The first location PL1 and the second location PL2 are connected by a travel path SR on which the vehicle 100 can travel. A plurality of external sensors 301 is provided around the travel path SR. In the present embodiment, the first location PL1 is a location at which the vehicle 100 is assembled. The second location PL2 is a location at which the vehicle 100 is inspected. The vehicle 100 that has passed the inspection at the second location PL2 is shipped from the factory FC. The inspection location DP is a location determined in advance and provided at the middle of the travel path SR as a location for inspecting the vehicle 100 through remote inspection or autonomous inspection. Specifically, the inspection location DP according to the present embodiment is a location for performing an inspection related to braking operation of the vehicle 100 through remote inspection. Each vehicle 100 assembled at the first location PL1 is conveyed to a predetermined start point of the first location PL1 with the vehicle control device 110, the drive device 120, the steering device 130, the braking device 140, and the communication device 150 mounted to the vehicle 100. That is, each vehicle 100 is disposed at the start point of the first location PL1 in a state of being able to travel through remote control. Each vehicle 100 travels from the start point of the first location PL1 to a predetermined goal point of the second location PL2 by way of the inspection location DP at the middle through remote control by the server device 200.

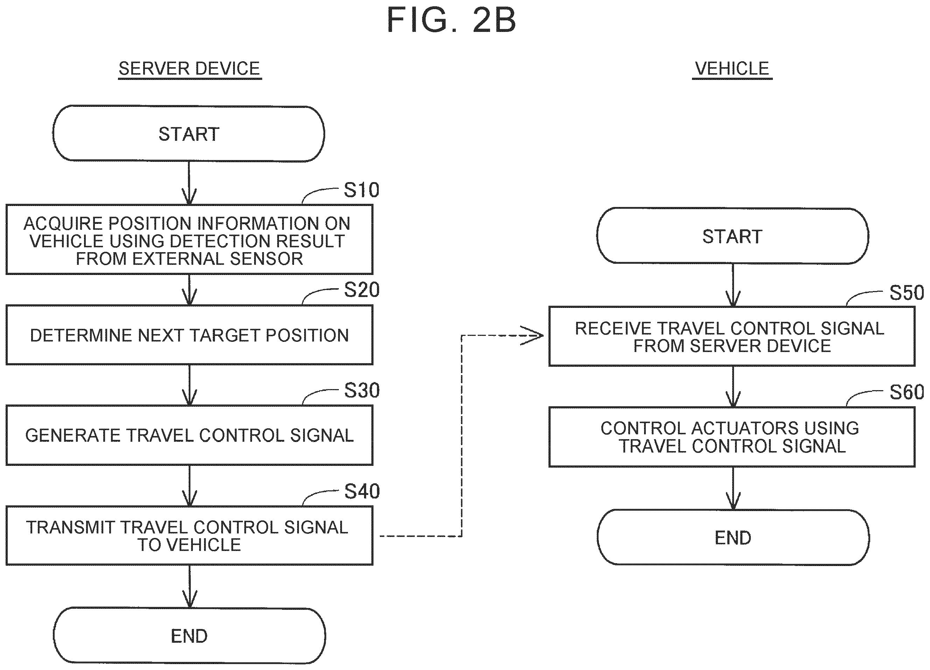

FIG. 2B is a flowchart of an unattended operation process executed in the first embodiment. The unattended operation process is a process for causing the vehicle 100 to travel through unattended operation. FIG. 2B is also considered to represent a method of causing the vehicle 100 to travel through unattended operation according to the present embodiment.

In S10, the remote control unit 210 of the server device 200 acquires position information on the vehicle 100 using the result of a detection output from the external sensor 301. In the present embodiment, the position information on the vehicle 100 includes the position and the orientation of the vehicle 100 in a global coordinate system of the factory FC. In the present embodiment, the external sensor 301 is a camera installed in the factory FC. In S10, a captured image is output as the detection result. The position and the orientation of the external sensor 301 in the factory FC have been adjusted in advance. The remote control unit 210 detects the vehicle 100 from an image acquired from the external sensor 301, and acquires the position and the orientation of the vehicle 100 in the factory FC from the position of the vehicle 100 in the image.

Particularly, in S10, the remote control unit 210 acquires the position of the vehicle 100 by detecting the outer shape of the vehicle 100 from the captured image, calculating the coordinates of measurement points of the vehicle 100 in the coordinate system of the captured image, and converting the calculated coordinates into coordinates in the global coordinate system. The outer shape of the vehicle 100 included in the captured image can be detected by inputting the captured image to a detection model that makes use of artificial intelligence, for example. Examples of the detection model include a trained machine learning model that has been trained to achieve one of semantic segmentation and instance segmentation. As the machine learning model, a convolutional neural network (hereinafter also referred to simply as a "CNN") trained through supervised learning with use of a learning data set can be used, for example. The learning data set includes a plurality of training images including the vehicle 100, and a label indicating whether each region in the training images is a region indicating the vehicle 100 or a region indicating an area other than the vehicle 100, for example. During training of the CNN, parameters of the CNN are preferably updated so as to reduce an error between the result output from the detection model and the label through back propagation (error back propagation method).

In S 10, in addition, the remote control unit 210 can acquire the orientation of the vehicle 100 by estimating the orientation based on the direction of a movement vector of the vehicle 100 calculated from variations in position of feature points of the vehicle 100 between frames of the captured image using an optical flow method, for example. The orientation of the vehicle 100 may be calculated using the result output from the internal sensor 161 such as an acceleration sensor or a yaw rate sensor mounted on the vehicle 100, for example.

In S20, the remote control unit 210 determines a target position for which the vehicle 100 should be bound next. In the present embodiment, the target position is represented by X, Y, and Z coordinates in the global coordinate system. The memory 202 stores a reference path in advance as a path along which the vehicle 100 should travel. The path is represented by a node that indicates a departure location, nodes that indicate pass points, a node that indicates a destination location, and links that connect between the nodes. The remote control unit 210 determines the target position for which the vehicle 100 should be bound next using the position information on the vehicle 100 and the reference path. The remote control unit 210 determines the target position on the reference path further ahead of the present location of the vehicle 100.

In S30, the remote control unit 210 generates a travel control signal for causing the vehicle 100 to travel toward the determined target position. In the present embodiment, the travel control signal includes the acceleration and the steering angle of the vehicle 100 as parameters. The remote control unit 210 calculates a travel speed of the vehicle 100 from transitions in position of the vehicle 100, and makes a comparison between the calculated travel speed and a target speed for the vehicle 100 determined in advance. The remote control unit 210 determines the acceleration such that the vehicle 100 accelerates when the travel speed is lower than the target speed, and determines the acceleration such that the vehicle 100 decelerates when the travel speed is higher than the target speed. The remote control unit 210 determines the steering angle such that the vehicle 100 does not deviate from the reference path when the vehicle 100 is positioned on the reference path, and determines the steering angle such that the vehicle 100 returns to the reference path when the vehicle 100 is not positioned on the reference path, or in other words when the vehicle 100 has deviated from the reference path.

In S40, the remote control unit 210 transmits the generated travel control signal to the vehicle 100. The remote control unit 210 acquires position information on the vehicle 100, determines a target position, generates a travel control signal, and transmits the travel control signal repeatedly in predetermined cycles.

In S50, the vehicle control unit 115 receives the travel control signal from the remote control unit 210. In S60, the vehicle control unit 115 causes the vehicle 100 to travel with the acceleration and the steering angle represented by the travel control signal by controlling the actuator group using the received travel control signal. The vehicle control unit 115 receives the travel control signal and controls the actuator group repeatedly in predetermined cycles. With the inspection system 50 according to the present embodiment, the vehicle 100 can be caused to travel through remote control, and therefore the vehicle 100 can be moved without using conveyance equipment such as a crane or a conveyor.

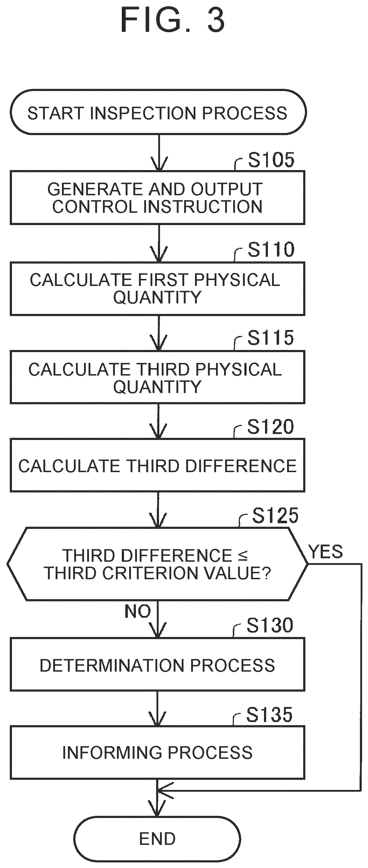

FIG. 3 is a flowchart of an inspection process for implementing an inspection method according to the present embodiment. In the present embodiment, the inspection process illustrated in FIG. 3 is started when the vehicle 100 traveling through unattended operation reaches the inspection location DP.

In S105, the remote control unit 210 causes the instruction generation unit 211 to generate and output a control instruction. Specifically, in S105 according to the present embodiment, the remote control unit 210 generates a control instruction and transmits the control instruction to a vehicle (target vehicle) 100 as a target. The control instruction generated in S105 is a control instruction for causing the target vehicle 100 to achieve target operation. The target operation means operation as a target for which various physical quantities to be discussed later are calculated. More specifically, the control instruction according to the present embodiment is a travel control signal for braking the target vehicle 100, and includes a control value that causes the braking device 140 of the target vehicle 100 to generate a predetermined braking force. In the present embodiment, when the control instruction transmitted in S105 is received by the target vehicle 100, braking operation of the target vehicle 100 based on the control instruction is achieved as the target operation. While the braking operation is being performed, one or more external sensors 301 included in the external sensor group 300 continue detecting the state of the target vehicle 100 for which the braking operation is being performed. Specifically, in the present embodiment, while the braking operation as the target operation is performed, the vehicle 100 continues being captured by an external sensor 301A and an external sensor 301B illustrated in FIG. 2A.

In S110 in FIG. 3, the first calculation unit 215 calculates a first physical quantity. The first physical quantity represents a physical quantity related to the target operation, and is calculated using a control instruction for achieving the target operation. That is, in S110, the first physical quantity is calculated using the control instruction generated in S105. The first physical quantity according to the present embodiment is a physical quantity that represents a braking force of the vehicle 100 achieved by braking operation as the target operation. Specifically, the first physical quantity is calculated as a braking distance traveled by the target vehicle 100 since the braking operation is started until the vehicle 100 is stopped. The first physical quantity as the braking distance is calculated using a timing when a control instruction is transmitted to the vehicle 100, a predetermined friction coefficient, and a travel speed of the vehicle 100 at the time immediately before the braking operation is started, for example. The friction coefficient that is used to calculate the first physical quantity as the braking distance is defined as a friction coefficient of a road surface at the inspection location DP under an ideal condition, for example. Under the ideal condition, foreign matter such as water and dirt does not adhere to the road surface, and the road surface is not frozen, for example.

In S115, the third calculation unit 225 calculates a third physical quantity. The third physical quantity represents a physical quantity related to the target operation, and is calculated using the result of a detection by the external sensor 301. The first physical quantity, the third physical quantity, and a second physical quantity to be described in relation to a second embodiment each represent the same physical quantity related to the same target operation. That is, the third physical quantity according to the present embodiment is calculated as a braking distance. The third physical quantity according to the present embodiment is calculated using the position of the vehicle 100 acquired using an image captured by the external sensor 301B. More specifically, the third physical quantity is calculated as a distance between a position of the vehicle 100 acquired using a captured image that captures the vehicle 100 at the timing to start braking operation and a position of the vehicle 100 acquired using a captured image that captures the vehicle 100 in the state of being stopped through the braking operation, for example. In the following, an external sensor 301 that is used to calculate a third physical quantity, such as the external sensor 301B, will also be referred to as a target external sensor 301. In other embodiments, a plurality of external sensors 301 may be used as target external sensors 301.

In S120, the comparison unit 230 makes a comparison between the first physical quantity and the third physical quantity calculated, and calculates a third difference that represents the difference between the first physical quantity and the third physical quantity. In S125, the comparison unit 230 determines whether the third difference is equal to or less than a third criterion value determined in advance.

When the third difference is more than the third criterion value in S125, the abnormality process execution unit 240 executes an abnormality process in S130 and S135. Specifically, in S130 according to the present embodiment, the abnormality process execution unit 240 executes, as a determination process, a process of determining that there is an abnormality with at least one of the server device 200, the surrounding environment of the vehicle 100 that performs the target operation, the target vehicle 100, and the external sensor 301. In S135, the abnormality process execution unit 240 executes an informing process as the abnormality process. Specifically, in S135, the abnormality process execution unit 240 causes the informing device 400 to announce the occurrence of an abnormality by transmitting an informing signal for announcing the occurrence of an abnormality to the informing device 400. The informing process may be executed prior to the determination process, for example. When the informing process is executed after the determination process, the abnormality process execution unit 240 may inform a user of information that represents a target with which it is determined that there is an abnormality in the determination process, for example, in the informing process.

Examples of the abnormality of the server device 200 include an abnormality in a function of the first calculation unit 215, an abnormality in a value stored in the memory 202 to be used to calculate a first physical quantity, an abnormality in the communication device 205 (e.g. a communication failure, a wire break, and a contact failure), etc. When the server device 200 includes the third calculation unit 225 as in the present embodiment, examples of the abnormality of the server device 200 further include an abnormality in a function of the third calculation unit 225 and an abnormality in a value stored in the memory 202 to be used to calculate a third physical quantity.

The abnormality in the surrounding environment means that the actual surrounding environment is different from an assumed surrounding environment. The assumed surrounding environment means a surrounding environment assumed as a precondition for determining at least one parameter to be used to calculate a first physical quantity. In the present embodiment, the surrounding environment corresponds to the state of a road surface traveled by the vehicle 100 during braking operation, that is, the state of a road surface at the inspection location DP. Thus, the abnormality in the surrounding environment according to the present embodiment is an abnormality in this road surface. The abnormality in this road surface means that the actual state of a road surface traveled by the vehicle 100 during braking operation is different from the state of a road surface as a precondition for determining a friction coefficient to be used to calculate a first physical quantity, and is caused by adhesion of foreign matter such as water and dirt to a road surface at the inspection location DP, freezing of a road surface at the inspection location DP, etc., for example.

When the third difference is more than the third criterion value, examples of the abnormality of the target vehicle 100 include an abnormality in software or hardware of the target vehicle 100. Specific examples of the abnormality of the target vehicle 100 include an assembly failure in an actuator group for the drive device 120, the steering device 130, the braking device 140, etc., an abnormality of the communication device 150 (e.g. a communication failure, a wire break, and a contact failure), an abnormality in a network in the vehicle 100 (e.g. a wire break and a contact failure), etc. When there is an abnormality with an actuator group, the communication device 150, or a network in the vehicle 100, the third difference may become relatively large as the target operation is achieved by the vehicle 100 incompletely. As a result, the third difference may exceed the third criterion value.

The abnormality of the external sensor 301 specifically means an abnormality of the target external sensor 301. Examples of the abnormality of the external sensor 301 include a disturbance that may affect the detection of a state of the vehicle 100 from the outside and an abnormality of the communication device 302 (e.g. a communication failure, a wire break, and a contact failure). When the external sensor 301 is constituted as a camera as in the present embodiment, examples of the disturbance as the abnormality of the external sensor 301 include foreign matter such as a leaf from a tree, a spider web, and dust adhering to a lens of the camera.

In the inspection process according to the present embodiment, the target with which it may be determined in S130 that there is an abnormality can be further narrowed down when a first condition determined in advance related to the normality of the server device 200 is met, when a second condition determined in advance related to the normality of the surrounding environment is met, when a third condition determined in advance related to the normality of the target vehicle 100 is met, and when a fifth condition determined in advance related to the normality of the external sensor 301 is met.

When the first condition is met, the abnormality process execution unit 240 determines in S130 that there is an abnormality with at least one of the surrounding environment, the target vehicle 100, and the external sensor 301. The first condition may include a first operation determined in advance being executed on a reception unit 90 to exclude the server device 200 from the target for an abnormality determination, for example. The first operation is preferably executed after it is confirmed by a user (a manager, in particular) that there is no abnormality with the server device 200, for example. Alternatively, the first operation is preferably an operation to execute a process of verifying the normality of the server device 200, and to execute a process of excluding the server device 200 from the target for an abnormality determination after such normality is verified, for example. In this case, the process of verifying the normality of the server device 200 may be executed by the server device 200, or may be executed by the external sensor 301, the informing device 400, the process management device 500, or another computer, rather than the server device 200, for example. The first condition described above can be considered as a condition under which it is less probable that there is an abnormality with the server device 200.

When the second condition is met, the abnormality process execution unit 240 determines in S130 that there is an abnormality with at least one of the server device 200, the target vehicle 100, and the external sensor 301. The second condition may include a second operation determined in advance being executed on the reception unit 90 to exclude the surrounding environment from the target for an abnormality determination, for example. The second operation is preferably executed after it is confirmed by a user (a manager, in particular) that there is no abnormality with the surrounding environment, for example. The second condition may include it being determined that there is no abnormality with the surrounding environment by the environment determination unit 250 that determines the presence or absence of an abnormality in the surrounding environment using an environment sensor that detects the surrounding environment, for example. In the present embodiment, the external sensor 301A and the external sensor 301B as the external sensor 301 are used as the environment sensor. The environment determination unit 250 analyzes each image that captures a road surface at the inspection location DP using the external sensor 301A and the external sensor 301B, and determines whether there is an abnormality with the road surface at the inspection location DP. In this manner, it is possible to determine the presence or absence of an abnormality in the surrounding environment more precisely by using the external sensor 301B as the target external sensor 301 and the external sensor 301A as the external sensor 301 different from the target external sensor 301 as the environment sensor. In the present embodiment, the external sensor 301A as an unattended operation sensor can also be used as the environment sensor. The second condition described above can also be considered as a condition under which it is less probable that there is an abnormality with the surrounding environment.

When the third condition is met, the abnormality process execution unit 240 determines in S130 that there is an abnormality with at least one of the server device 200, the surrounding environment, and the external sensor 301. The third condition may include a third operation determined in advance being executed on the reception unit 90 to indicate that there is no abnormality with the target vehicle 100, for example. The third operation is preferably executed after it is confirmed by a user (a manager, in particular) that there is no abnormality with the target vehicle 100, for example. The third condition described above can also be considered as a condition under which it is less probable that there is an abnormality with the target vehicle 100.

When the fifth condition is met, the abnormality process execution unit 240 determines in S130 that there is an abnormality with at least one of the server device 200, the surrounding environment, and the target vehicle 100. The fifth condition may include a fifth operation determined in advance being executed on the reception unit 90 to indicate that there is no abnormality with the target external sensor 301, for example. The fifth operation is preferably executed after it is confirmed by a user (a manager, in particular) that there is no abnormality with the target external sensor 301, for example. Alternatively, the fifth operation is preferably an operation to execute a process of verifying the normality of the external sensor 301, and to execute a process of excluding the external sensor 301 from the target for an abnormality determination after such normality is verified, for example. In this case, the process of verifying the normality of the external sensor 301 may be executed by the external sensor 301, or may be executed by the server device 200, the informing device 400, the process management device 500, or another computer, rather than the external sensor 301, for example. The fifth condition described above can also be considered as a condition under which it is less probable that there is an abnormality with the target external sensor 301.

When the first condition, the second condition, and the third condition, among the above conditions, are met, for example, the abnormality process execution unit 240 determines in S130 that there is an abnormality with the external sensor 301. That is, in this case, it is possible to specify that there is an abnormality with the external sensor 301. In this case, it is possible to enhance the possibility that the inspection system 50 appropriately executes a remote inspection for the vehicle 100 that follows the target vehicle 100, by the inspection system 50 executing a process for eliminating an abnormality in the external sensor 301 or by a user performing work for eliminating the abnormality.

When the first condition, the second condition, and the fifth condition are met, for example, the abnormality process execution unit 240 determines in S130 that there is an abnormality with the target vehicle 100. In this case, executing an inspection process for the target vehicle 100 corresponds to appropriately performing a remote inspection on the target vehicle 100 using the external sensor 301 in a state in which it is less probable that there is an abnormality with the server device 200, the surrounding environment, or the external sensor 301. That is, in the present embodiment, it is possible to perform a remote inspection related to braking operation of the vehicle 100 using the inspection process. Specifically, it is possible to perform a remote inspection on the braking device 140 or the internal sensor 161 related to braking operation using the inspection process. Further, determining that there is an abnormality with the target vehicle 100 in the inspection process corresponds to discovering an abnormality of the target vehicle 100 in the remote inspection. In this case, it is possible for the inspection system 50 to execute a process for eliminating an abnormality of the target vehicle 100, or for a user to perform work for eliminating the abnormality, according to the result of the remote inspection at the second location PL2 in the factory FC or at another location, for example.

When the first condition, the third condition, and the fifth condition are met, for example, the abnormality process execution unit 240 determines in S130 that there is an abnormality with the surrounding environment. That is, in this case, it is possible to specify that there is an abnormality with the surrounding environment. Specifically, in the present embodiment, it is possible to specify that there is an abnormality with the inspection location DP. In this case, it is possible to enhance the possibility that the inspection system 50 appropriately executes a remote inspection for the vehicle 100 that follows the target vehicle 100, by the inspection system 50 executing a process for eliminating an abnormality in the inspection location DP or by a user performing work for eliminating the abnormality.

When the second condition, the third condition, and the fifth condition are met, for example, the abnormality process execution unit 240 determines in S130 that there is an abnormality with the server device 200. That is, in this case, it is possible to specify that there is an abnormality with the server device 200. In this case, it is possible to enhance the possibility that the inspection system 50 appropriately executes a remote inspection for the vehicle 100 that follows the target vehicle 100, by the inspection system 50 executing a process for eliminating an abnormality in the server device 200 or by a user performing work for eliminating the abnormality.

For example, even when it is determined that there is an abnormality with more than one target in the determination process and a user is informed of information indicating that there is an abnormality with at least one of the server device 200, the surrounding environment, the target vehicle 100, and the target external sensor 301 in the informing process, the user can specify which of the above there is an abnormality with. Specifically, when it is less probable that there is an abnormality with the server device 200, the surrounding environment, and the target vehicle 100, the user can specify that there is an abnormality with the external sensor 301. When it is less probable that there is an abnormality with the server device 200, the surrounding environment, and the target external sensor 301, the user can specify that there is an abnormality with the target vehicle 100. When it is less probable that there is an abnormality with the server device 200, the target vehicle 100, and the target external sensor 301, the user can specify that there is an abnormality with the surrounding environment. When it is less probable that there is an abnormality with the surrounding environment, the target vehicle 100, and the target external sensor 301, the user can specify that there is an abnormality with the server device 200. When it is less probable that there is an abnormality with the surrounding environment and the target vehicle 100, the user can specify that there is an abnormality with the target external sensor 301. The probability at which there is an abnormality with the server device 200, the surrounding environment, the target vehicle 100, or the target external sensor 301 becomes low when the first condition, the second condition, the third condition, or the fifth condition is met, respectively, and when it is confirmed by the user that there is no abnormality with the server device 200, the surrounding environment, the target vehicle 100, or the external sensor 301, for example.

When the third difference is equal to or less than the third criterion value in S125, the server device 200 ends the inspection process without executing the abnormality process. In this case, completing the inspection process for the target vehicle 100 corresponds to appropriately executing a remote inspection on the target vehicle 100 and discovering no abnormality of the target vehicle 100 in the remote inspection.

With the inspection system 50 according to the present embodiment described above, the abnormality process is executed when the third difference that represents the difference between the first physical quantity and the third physical quantity that each represent the same physical quantity related to the same target operation is more than the third criterion value, and thus it is possible to enhance the possibility that the inspection system 50 appropriately inspects the vehicle 100. In particular, in the present embodiment, the abnormality process execution unit 240 executes, as the abnormality process, a process of determining that there is an abnormality with at least one of the server device 200, the surrounding environment, the target vehicle 100, and the external sensor 301. Thus, it is possible to specify that there is an abnormality with at least one of the server device 200, the surrounding environment, the target vehicle 100, and the external sensor 301 when the third difference is more than the third criterion value.

In the present embodiment, when the first condition is met and the third difference is more than the third criterion value, the abnormality process execution unit 240 executes a process of determining that there is an abnormality with at least one of the surrounding environment, the target vehicle 100, and the external sensor 301. Thus, it is possible to specify that there is an abnormality with at least one of the surrounding environment, the target vehicle 100, and the external sensor 301 when it is less probable that there is an abnormality with the server device 200 and the third difference is more than the third criterion value.

In the present embodiment, when the second condition is met and the third difference is more than the third criterion value, the abnormality process execution unit 240 executes a process of determining that there is an abnormality with at least one of the server device 200, the target vehicle 100, and the external sensor 301. Thus, it is possible to specify that there is an abnormality with at least one of the server device 200, the target vehicle 100, and the external sensor 301 when it is less probable that there is an abnormality with the surrounding environment and the third difference is more than the third criterion value.

In the present embodiment, when the third condition is met and the third difference is more than the third criterion value, the abnormality process execution unit 240 executes a process of determining that there is an abnormality with at least one of the server device 200, the surrounding environment, and the external sensor 301. Thus, it is possible to specify that there is an abnormality with at least one of the server device 200, the surrounding environment, and the external sensor 301 when it is less probable that there is an abnormality with the target vehicle 100 and the third difference is more than the third criterion value.

In the present embodiment, when the fifth condition is met and the third difference is more than the third criterion value, the abnormality process execution unit 240 executes a process of determining that there is an abnormality with at least one of the server device 200, the surrounding environment, and the target vehicle 100. Thus, it is possible to specify that there is an abnormality with at least one of the server device 200, the surrounding environment, and the target vehicle 100 when it is less probable that there is an abnormality with the external sensor 301 and the third difference is more than the third criterion value.

In the present embodiment, the target external sensor 301 is an unattended operation sensor that is used to move the target vehicle 100 through unattended operation. Thus, it is possible to use an unattended operation sensor as the target external sensor 301.

### B. Second Embodiment

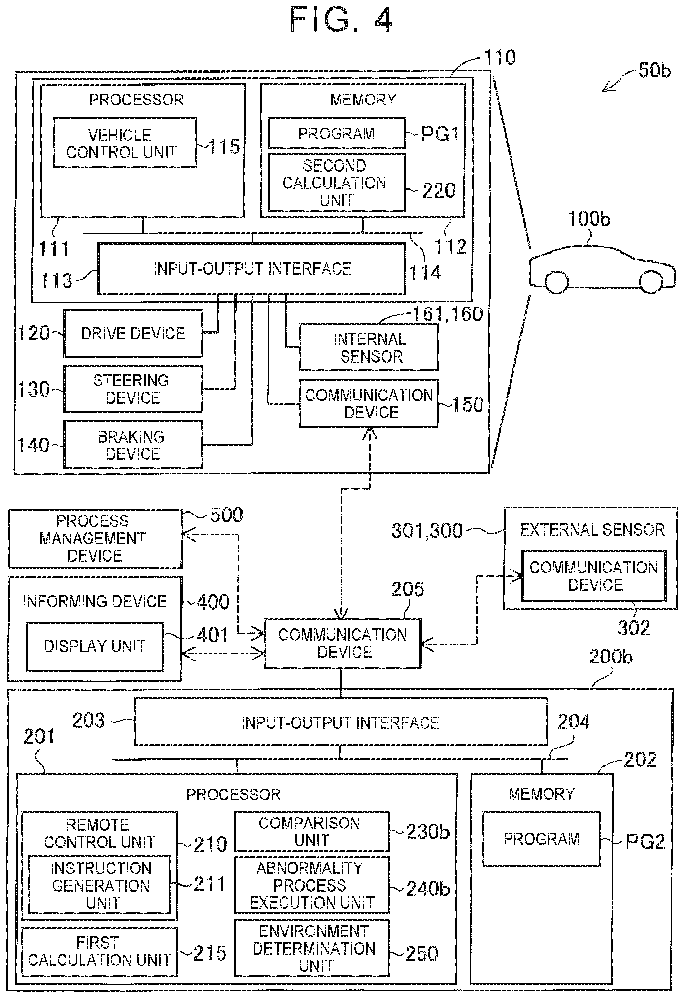

FIG. 4 illustrates the configuration of an inspection system 50b according to a second embodiment. Unlike the first embodiment, the inspection system 50b does not include the third calculation unit 225, but includes a second calculation unit 220. Of the components of the inspection system 50b and a server device 200b according to the second embodiment, portions not particularly described are the same as those according to the first embodiment.

In the present embodiment, the processor 111 provided in a vehicle 100b functions as the second calculation unit 220, in addition to functioning as the vehicle control unit 115, by executing the computer program PG1 stored in the memory 112. The second calculation unit 220 calculates a second physical quantity. The second physical quantity represents a physical quantity related to the target operation, and is calculated using the result of a detection by the internal sensor 161 mounted on a target vehicle 100b. As described above, the second physical quantity, the first physical quantity, and the third physical quantity each represent the same physical quantity related to the same target operation. The target operation according to the present embodiment is braking operation as in the first embodiment, and the first physical quantity and the second physical quantity are each calculated as a braking distance. The second physical quantity according to the present embodiment is calculated using the result of a detection by a yaw rate sensor, an acceleration sensor, or a hydraulic sensor provided in the vehicle 100b as the internal sensor 161, for example. In the following, the internal sensor 161 that is used to calculate a second physical quantity will also be referred to as a target internal sensor 161. A plurality of internal sensors 161 may be used as target internal sensors 161 as described above, or a single internal sensor 161 may be used as a target internal sensor 161.

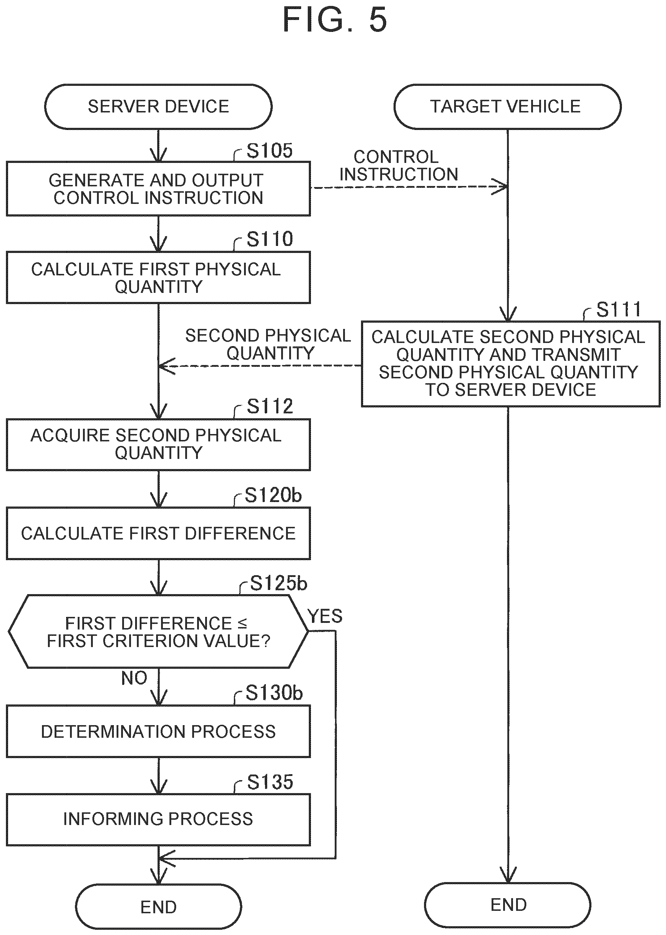

FIG. 5 is a flowchart of an inspection process for implementing an inspection method according to the second embodiment. In FIG. 5, steps that are similar to those in FIG. 3 are given the same reference numerals as those in FIG. 3. In FIG. 5, the flow of information exchanged between the server device 200b and the target vehicle 100b is indicated by broken arrows.

In S111, the second calculation unit 220 of the target vehicle 100b calculates a second physical quantity described above, and transmits the second physical quantity to the server device 200b. In S112, a comparison unit 230b acquires the second physical quantity transmitted from the target vehicle 100b.

In S120b, the comparison unit 230b makes a comparison between the first physical quantity calculated in S110 and the second physical quantity calculated in S111, and calculates a first difference that represents the difference between the first physical quantity and the second physical quantity. In S125b, the comparison unit 230b determines whether the first difference is equal to or less than a first criterion value.

When the first difference is more than the first criterion value in S125b, an abnormality process execution unit 240b executes an abnormality process in S130b and S135. In S130b, the abnormality process execution unit 240b executes, as a determination process, a process of determining that there is an abnormality with at least one of the server device 200b, the surrounding environment, and the target vehicle 100b.

When the first difference is more than the first criterion value, examples of the abnormality of the target vehicle 100b include an abnormality in the target internal sensor 161 (e.g. a misalignment or an operation failure), in addition to the examples of the abnormality for the case where the third difference is more than the third criterion value. When there is an abnormality with the target internal sensor 161, the first difference may become relatively large as the state of the vehicle 100b that is performing the target operation is not appropriately detected by the internal sensor 161. As a result, the first difference may exceed the first criterion value.

In the inspection process according to the second embodiment, the target with which it may be determined in S130b that there is an abnormality can be further narrowed down when a first condition determined in advance related to the normality of the server device 200b is met, when a second condition determined in advance related to the normality of the surrounding environment is met, and when a third condition determined in advance related to the normality of the target vehicle 100b is met.

When the first condition is met, the abnormality process execution unit 240b determines in S130b that there is an abnormality with at least one of the surrounding environment and the target vehicle 100b. The first condition according to the second embodiment may include a first operation being executed on the reception unit 90, as in the first embodiment, for example. The first condition according to the second embodiment may include the number of times when the first difference is more than the first criterion value being equal to or less than a first criterion number of times determined in advance for a plurality of vehicles 100b that is different from the target vehicle 100b in a first criterion period determined in advance, for example. The first criterion period is defined as a period for which an inspection process is executed for a number of vehicles 100b, the number being determined in advance, by the time immediately before a verification process is executed for the target vehicle 100b, for example. The first condition being met means that it is less probable that there is an abnormality with the server device 200b before the verification process for the target vehicle 100b is executed. In this case, there is a high possibility that it is kept less probable that there is an abnormality with the server device 200b even at the timing when the verification process for the target vehicle 100b is executed. As in the first embodiment, the first condition described above can be considered as a condition under which it is less probable that there is an abnormality with the server device 200b.

When the second condition is met, the abnormality process execution unit 240b determines in S130b that there is an abnormality with at least one of the server device 200b and the target vehicle 100b. The second condition according to the second embodiment may be a condition that is similar to the second condition according to the first embodiment, for example. When the third condition is met, the abnormality process execution unit 240b determines in S130b that there is an abnormality with at least one of the server device 200b and the surrounding environment. The third condition according to the second embodiment may be a condition that is similar to the third condition according to the first embodiment, for example.

When the first condition and the second condition, among the above conditions, are met, for example, the abnormality process execution unit 240b determines in S130b that there is an abnormality with the target vehicle 100b. That is, this case corresponds to appropriately executing a remote inspection on the target vehicle 100b using the internal sensor 161 in a state in which it is less probable that there is an abnormality with the server device 200b or the surrounding environment. Further, determining that there is an abnormality with the target vehicle 100b in the inspection process corresponds to discovering an abnormality of the target vehicle 100b in the remote inspection.

When the first condition and the third condition are met, for example, the abnormality process execution unit 240b determines in S130b that there is an abnormality with the surrounding environment. That is, in this case, as in the first embodiment, it is possible to specify that there is an abnormality with the surrounding environment.

When the second condition and the third condition are met, for example, the abnormality process execution unit 240b determines in S130b that there is an abnormality with the server device 200b. That is, in this case, as in the first embodiment, it is possible to specify that there is an abnormality with the server device 200b.

For example, even when it is determined that there is an abnormality with more than one target in the determination process in S130b and a user is informed of information indicating that there is an abnormality with at least one of the server device 200b, the surrounding environment, and the target vehicle 100b in the informing process in S135, substantially as in the first embodiment, the user can specify which of the above there is an abnormality with. Specifically, when it is less probable that there is an abnormality with the server device 200b and the surrounding environment, the user can specify that there is an abnormality with the target vehicle 100b. When it is less probable that there is an abnormality with the server device 200b and the target vehicle 100b, the user can specify that there is an abnormality with the surrounding environment. When it is less probable that there is an abnormality with the surrounding environment and the target vehicle 100b, the user can specify that there is an abnormality with the server device 200b.

When the first difference is equal to or less than the first criterion value in S125b, the server device 200b ends the inspection process without executing the abnormality process. In this case, completing the inspection process for the target vehicle 100b corresponds to appropriately executing a remote inspection on the target vehicle 100b and discovering no abnormality of the target vehicle 100b in the remote inspection.

With the inspection system 50b according to the second embodiment described above, the abnormality process is executed when the first difference that represents the difference between the first physical quantity and the second physical quantity that each represent the same physical quantity related to the same target operation is more than the first criterion value, and thus it is possible to enhance the possibility that the inspection system 50b appropriately inspects the vehicle 100b. In particular, in the present embodiment, the abnormality process execution unit 240b executes, as the abnormality process, a process of determining that there is an abnormality with at least one of the server device 200b, the surrounding environment, and the target vehicle 100b. Thus, it is possible to specify that there is an abnormality with at least one of the server device 200b, the surrounding environment, and the target vehicle 100b when the first difference is more than the first criterion value.

**In** the present embodiment, when the first condition is met and the first difference is more than the first criterion value, the abnormality process execution unit 240b executes a process of determining that there is an abnormality with at least one of the surrounding environment and the target vehicle 100b. Thus, it is possible to specify that there is an abnormality with at least one of the surrounding environment and the target vehicle 100b when it is less probable that there is an abnormality with the server device 200b and the first difference is more than the first criterion value.

In the present embodiment, when the second condition is met and the first difference is more than the first criterion value, the abnormality process execution unit 240b executes a process of determining that there is an abnormality with at least one of the server device 200b and the target vehicle 100b. Thus, it is possible to specify that there is an abnormality with at least one of the server device 200b and the target vehicle 100b when it is less probable that there is an abnormality with the surrounding environment and the first difference is more than the first criterion value.

In the present embodiment, when the third condition is met and the first difference is more than the first criterion value, the abnormality process execution unit 240b executes a process of determining that there is an abnormality with at least one of the server device 200b and the surrounding environment. Thus, it is possible to specify that there is an abnormality with at least one of the server device 200b and the surrounding environment when it is less probable that there is an abnormality with the target vehicle 100b and the first difference is more than the first criterion value.

### C. Third Embodiment

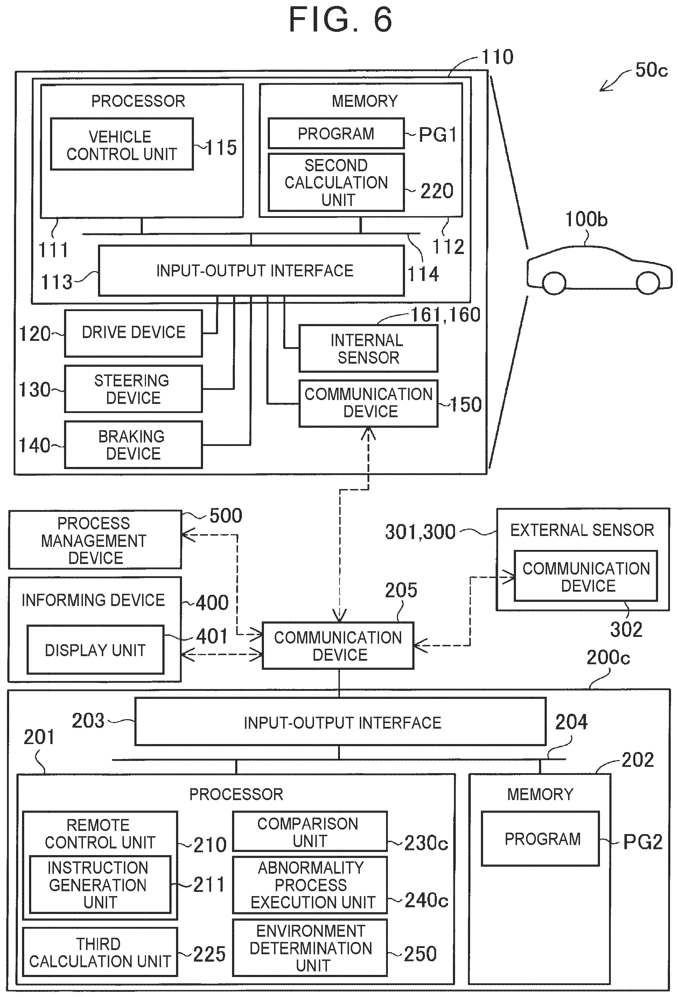

FIG. 6 illustrates the configuration of an inspection system 50c according to a third embodiment. Unlike the first embodiment, the inspection system 50c does not include the first calculation unit 215, but includes a second calculation unit 220. Of the components of the inspection system 50c and a server device 200c according to the third embodiment, portions not particularly described are the same as those according to the first embodiment.

In the present embodiment, the components of the vehicle 100b are the same as those according to the second embodiment, and include a second calculation unit 220. The server device 200c includes the third calculation unit 225 as in the first embodiment, but the server device 200c does not include the first calculation unit 215 unlike the first embodiment.

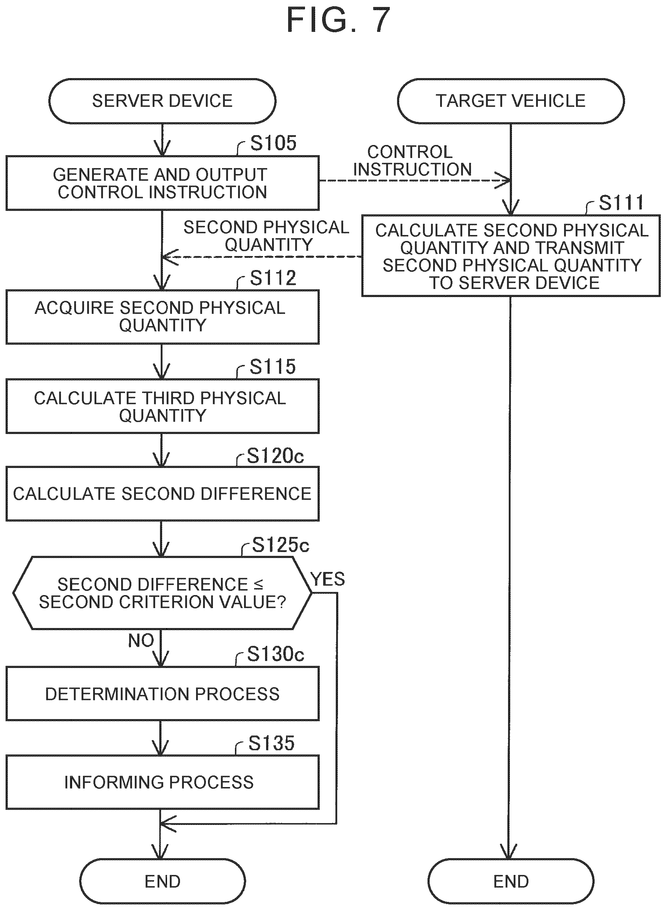

FIG. 7 is a flowchart of an inspection process for implementing an inspection method according to the third embodiment. In FIG. 7, steps that are similar to those in FIGS. 3 and 5 are given the same reference numerals as those in FIGS. 3 and 5.

In S120c, a comparison unit 230c makes a comparison between the second physical quantity calculated in S111 and the third physical quantity calculated in S115, and calculates a second difference that represents the difference between the second physical quantity and the third physical quantity. In S125c, the comparison unit 230c determines whether the second difference is equal to or less than a second criterion value.

When the second difference is more than the second criterion value in S125c, an abnormality process execution unit 240c executes an abnormality process in S130c and S135. In S130c, the abnormality process execution unit 240c executes, as a determination process, a process of determining that there is an abnormality with at least one of the target internal sensor 161 and the target external sensor 301.

In the inspection process according to the third embodiment, the target with which it may be determined in S130c that there is an abnormality can be further narrowed down when a fourth condition determined in advance related to the normality of the target internal sensor 161 is met and when a fifth condition determined in advance related to the normality of the external sensor 301 is met.

When the fourth condition is met, the abnormality process execution unit 240c determines in S130c that there is an abnormality with the external sensor 301. That is, in this case, it is possible to specify that there is an abnormality with the external sensor 301. The fourth condition may include a fourth operation determined in advance being executed on the reception unit 90 to exclude the internal sensor 161 mounted on the target vehicle 100b from the target for an abnormality determination, for example. The fourth operation is preferably executed after it is confirmed by a user (a manager, in particular) that there is no abnormality with the internal sensor 161 mounted on the target vehicle 100b, for example. The fourth condition described above can also be considered as a condition under which it is less probable that there is an abnormality with the internal sensor 161 mounted on the target vehicle 100b.

When the fifth condition is met, the abnormality process execution unit 240c determines in S130c that there is an abnormality with the target internal sensor 161. That is, in this case, executing an inspection process for the target vehicle 100b corresponds to appropriately executing a remote inspection on the target internal sensor 161 using the external sensor 301 in a state in which it is less probable that there is an abnormality with the external sensor 301. Further, determining that there is an abnormality with the target internal sensor 161 in the inspection process corresponds to discovering an abnormality of the target internal sensor 161 in the remote inspection. In this case, it is possible for the inspection system 50c to execute a process for eliminating an abnormality of the target internal sensor 161, or for a user to perform work for eliminating the abnormality, according to the result of the remote inspection at the second location PL2 in the factory FC or at another location, for example. The fifth condition according to the third embodiment may be similar to the fifth condition according to the first embodiment, for example.

For example, even when it is determined that there is an abnormality with more than one target in the determination process in S130c and a user is informed of information indicating that there is an abnormality with at least one of the target internal sensor 161 and the target external sensor 301 in the informing process in S135, substantially as in the first and second embodiments, the user can specify which of the above there is an abnormality with. Specifically, when it is less probable that there is an abnormality with the target internal sensor 161, the user can specify that there is an abnormality with the target external sensor 301. When it is less probable that there is an abnormality with the target external sensor 301, the user can specify that there is an abnormality with the target internal sensor 161. The probability at which there is an abnormality with the target internal sensor 161 becomes low when the fourth condition is met and when it is confirmed by the user that there is no abnormality with the target internal sensor 161, for example.

When the second difference is equal to or less than the second criterion value in S125c, the server device 200c ends the inspection process without executing the abnormality process. In this case, completing the inspection process for the target vehicle 100b corresponds to appropriately executing a remote inspection on the target internal sensor 161 using the external sensor 301 in a state in which it is less probable that there is an abnormality with the surrounding environment and discovering no abnormality of the target internal sensor 161 in the remote inspection.

With the inspection system 50c according to the third embodiment described above, the abnormality process is executed when the second difference that represents the difference between the second physical quantity and the third physical quantity that each represent the same physical quantity related to the same target operation is more than the second criterion value, and thus it is possible to enhance the possibility that the inspection system 50c appropriately inspects the vehicle 100b. In particular, in the present embodiment, the abnormality process execution unit 240c executes, as the abnormality process, a process of determining that there is an abnormality with at least one of the target internal sensor 161 and the target external sensor 301. Thus, it is possible to specify that there is an abnormality with at least one of the target internal sensor 161 and the target external sensor 301 when the second difference is more than the second criterion value.

In the present embodiment, when the fourth condition is met and the second difference is more than the second criterion value, the abnormality process execution unit 240c executes a process of determining that there is an abnormality with the target external sensor 301. Thus, it is possible to specify that there is an abnormality with the target external sensor 301 when it is less probable that there is an abnormality with the target internal sensor 161 and the second difference is more than the second criterion value.

In the present embodiment, when the fifth condition is met and the second difference is more than the second criterion value, the abnormality process execution unit 240c executes a process of determining that there is an abnormality with the target internal sensor 161. Thus, it is possible to specify that there is an abnormality with the target internal sensor 161 when it is less probable that there is an abnormality with the target external sensor 301 and the second difference is more than the second criterion value.

### D. Fourth Embodiment

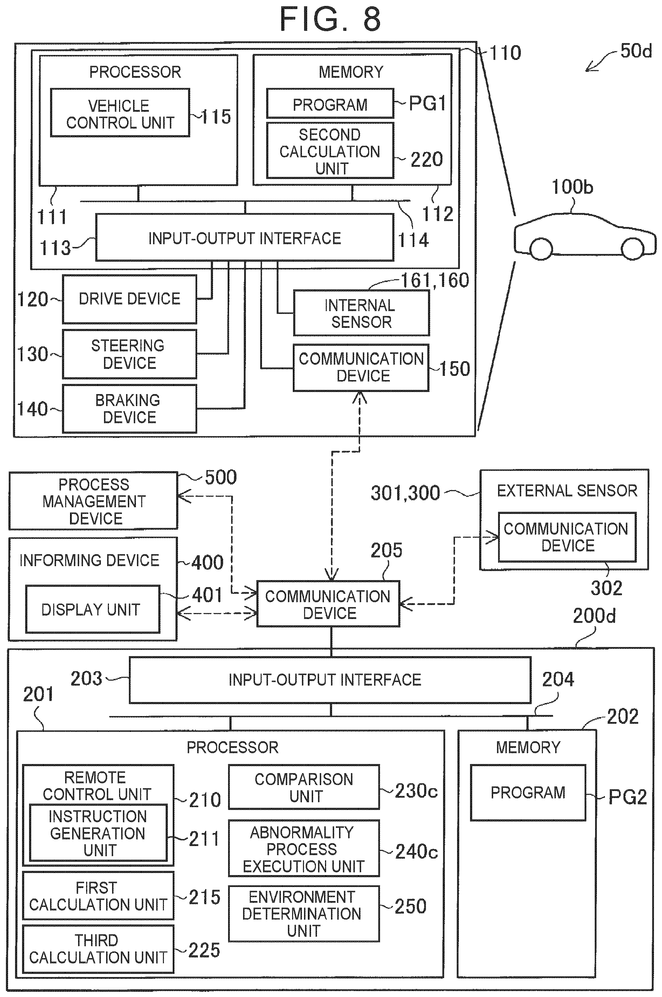

FIG. 8 illustrates the configuration of an inspection system 50d according to a fourth embodiment. Unlike the first embodiment, the inspection system 50d further includes a second calculation unit 220, in addition to the first calculation unit 215 and the third calculation unit 225. Of the components of the inspection system 50d and a server device 200d according to the fourth embodiment, portions not particularly described are the same as those according to the first embodiment.

In the present embodiment, as in the first embodiment, the server device 200d includes a first calculation unit 215 and a third calculation unit 225. The components of the vehicle 100b are the same as those according to the second embodiment, and include a second calculation unit 220.

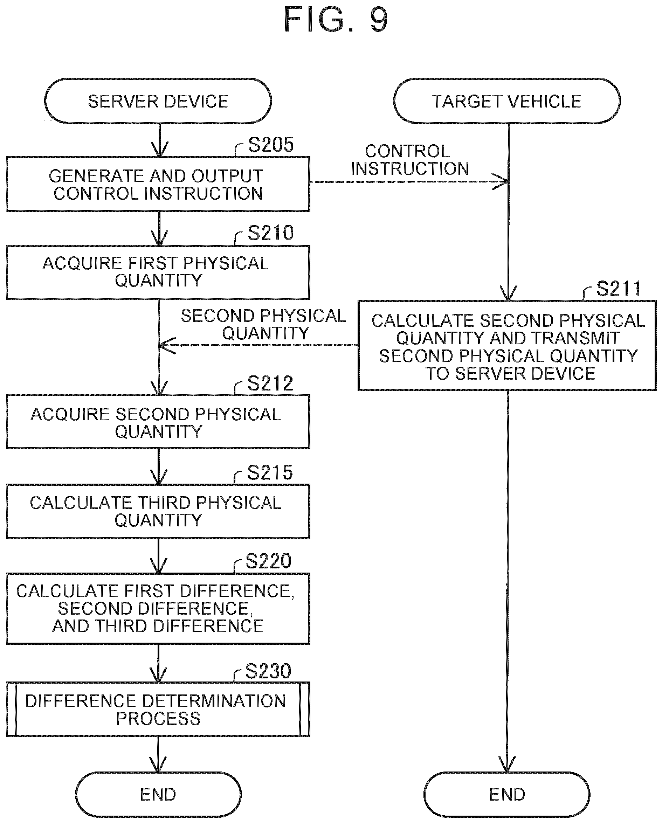

FIG. 9 is a flowchart of an inspection process for implementing an inspection method according to the fourth embodiment.

S205, S210, S211, S212, and S215 are the same as S105, S110, S111, S112, and S115, respectively, in FIGS. 3, 5, and 7. In S220, a comparison unit 230d calculates a first difference, a second difference, and a third difference. In S230, the server device 200d executes a difference determination process to be discussed later.

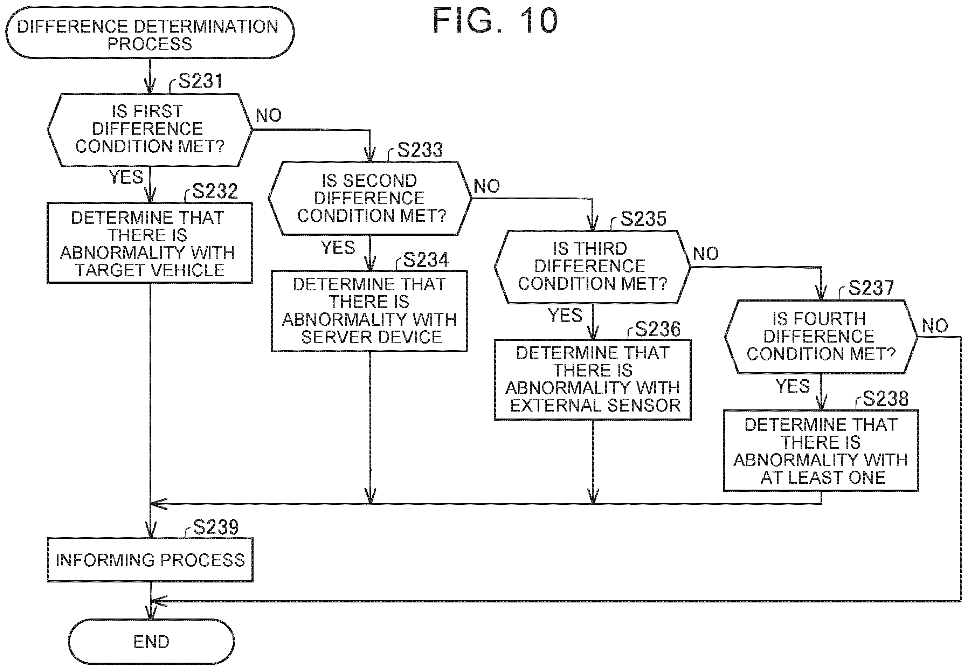

FIG. 10 is a flowchart of the difference determination process executed in S230 in FIG. 9. In S231, the comparison unit 230d determines whether a first difference condition is met for the first difference, the second difference, and the third difference calculated in S220 in FIG. 9. The first difference condition is a condition to be met when the first difference is more than a first criterion value, the second difference is more than a second criterion value, and the third difference is equal to or less than a third criterion value. In the present embodiment, the first criterion value, the second criterion value, and the third criterion value are the same value. When the first difference condition is met, there is a high possibility that the first physical quantity and the third physical quantity, of the physical quantities calculated, are appropriate, and that the second physical quantity is not appropriate. Thus, in this case, it is less probable that there is an abnormality with the server device 200d, the surrounding environment, or the external sensor 301, and it is highly probable that there is an abnormality with the target vehicle 100b. In particular, in this case, the third difference is equal to or less than the third criterion value, and thus it is less probable that there is an abnormality related to the achievement of the target operation by the target vehicle 100b, and it is highly probable that there is an abnormality with the target internal sensor 161.

When the first difference condition is met in S231, an abnormality process execution unit 240d executes, as the abnormality process, a process of determining that there is an abnormality with the target vehicle 100b in S232. In this case, executing an inspection process for the target vehicle 100b corresponds to appropriately executing a remote inspection on the target vehicle 100b using the external sensor 301 in a state in which it is less probable that there is an abnormality with the server device 200d, the surrounding environment, or the external sensor 301. Further, determining that there is an abnormality with the target vehicle 100b in the inspection process corresponds to discovering an abnormality of the target vehicle 100b in the remote inspection.

When the first difference condition is not met in S231, the comparison unit 230d determines whether a second difference condition is met for the first difference, the second difference, and the third difference in S233. The second difference condition is a condition to be met when the first difference is more than a first criterion value, the second difference is equal to or less than a second criterion value, and the third difference is more than a third criterion value. When the second difference condition is met, there is a high possibility that the second physical quantity and the third physical quantity, of the physical quantities calculated, are appropriate, and that the first physical quantity is not appropriate. Thus, in this case, it is less probable that there is an abnormality with the surrounding environment, the target vehicle 100b, or the external sensor 301, and it is highly probable that there is an abnormality with the server device 200d.

When the second difference condition is met in S233, the abnormality process execution unit 240d executes, as the abnormality process, a process of determining that there is an abnormality with the server device 200d in S234.

When the second difference condition is not met in S233, the comparison unit 230d determines whether the third difference condition is met for the first difference, the second difference, and the third difference in S235. The third difference condition is a condition to be met when the first difference is equal to or less than a first criterion value, the second difference is more than a second criterion value, and the third difference is more than a third criterion value. When the third difference condition is met, there is a high possibility that the first physical quantity and the second physical quantity, of the physical quantities calculated, are appropriate, and that the third physical quantity is not appropriate. Thus, in this case, it is less probable that there is an abnormality with the server device 200d, the surrounding environment, or the target vehicle 100b, and it is highly probable that there is an abnormality with the target external sensor 301. When one of the first difference condition, the second difference condition, and the third difference condition is met, it is considered to be successfully specified that it is less probable that there is an abnormality with the surrounding environment.

When the third difference condition is met in S235, the abnormality process execution unit 240d executes, as the abnormality process, a process of determining that there is an abnormality with the external sensor 301 in S236.

When the third difference condition is not met in S235, the comparison unit 230d determines whether a fourth difference condition is met for the first difference, the second difference, and the third difference in S237. The fourth difference condition is a condition to be met when the first difference is more than a first criterion value, the second difference is more than a second criterion value, and the third difference is more than a third criterion value.

When the fourth difference condition is met in S237, the abnormality process execution unit 240d executes, as the abnormality process, a process of determining that there is an abnormality with at least one of the server device 200d, the surrounding environment, the target vehicle 100b, and the target external sensor 301 in S238.

In S239, the abnormality process execution unit 240d executes an informing process as the abnormality process, substantially as in S135 in FIGS. 3, 5, and 7.

When the fourth difference condition is not met in S237, the server device 200d ends the inspection process without executing the abnormality process. In this case, completing the inspection process for the target vehicle 100b corresponds to appropriately executing a remote inspection on the target vehicle 100b and discovering no abnormality of the target vehicle 100b in the remote inspection.

With the inspection system 50d according to the fourth embodiment described above, the abnormality process execution unit 240d executes a process of determining that there is an abnormality with the target vehicle 100b when the first difference condition is met, executes a process of determining that there is an abnormality with the server device 200d when the second difference condition is met, and executes a process of determining that there is an abnormality with the external sensor 301 when the third difference condition is met. Thus, it is possible to specify which of the server device 200d, the target vehicle 100b, and the external sensor 301 there is an abnormality with, using the first difference, the second difference, and the third difference.

In other embodiments, when the inspection system 50d includes the first calculation unit 215, the second calculation unit 220, and the third calculation unit 225, it is not necessary that the comparison unit 230d should execute all of the process of determining whether the first difference is equal to or less than the first criterion value, the process of determining whether the second difference is equal to or less than the second criterion value, and the process of determining whether the third difference is equal to or less than the third criterion value, and the comparison unit 230d may execute only one or two of such processes. In this case, the process to be executed by the comparison unit 230d may be determined according to the purpose of the inspection process, or may be determined according to whether it is appropriate to use the physical quantities for comparison, for example. In this case, it is not necessary to calculate all of the first physical quantity, the second physical quantity, and the third physical quantity, and only two physical quantities to be compared by the comparison unit 230d may be calculated, for example. In other embodiments, the abnormality process execution unit 240d may execute the abnormality process when a fourth difference obtained by comparing three physical quantities, namely the first physical quantity, the second physical quantity, and the third physical quantity, is more than a criterion value. In this case, the fourth difference is defined as the largest one of the first difference, the second difference, and the third difference.

In an aspect in which the process to be executed by the comparison unit 230d is determined according to the purpose of the inspection process, the comparison unit 230d may execute a process of determining whether the second difference is equal to or less than the second criterion value when the target to be inspected through a remote inspection is the internal sensor 161, for example. The comparison unit 230d may execute a process of determining whether the first difference is equal to or less than the first criterion value or a process of determining whether the third difference is equal to or less than the third criterion value when the purpose of the inspection process is to confirm the presence of absence of an abnormality of the external environment or to inspect an abnormality of the vehicle 100b that is different from an abnormality of the internal sensor 161. The comparison unit 230d may execute a process of determining whether the second difference is equal to or less than the second criterion value or a process of determining whether the third difference is equal to or less than the third criterion value when the purpose of the inspection process is to confirm the presence or absence of an abnormality in the external sensor 301. When the process to be executed by the comparison unit 230d is determined according to the purpose of the inspection process in this manner, the reception unit 90 may be configured to receive input of the purpose of the inspection process, for example.

In an aspect in which the process to be executed by the comparison unit 230d is determined according to whether it is appropriate to use the physical quantities for comparison, the comparison unit 230d may execute a process of determining whether the third difference is equal to or less than the third criterion value when the target vehicle 100b is required to travel through the travel path SR with bumps and dips before reaching the inspection location DP, for example. This allows a comparison between the first physical quantity and the third physical quantity to be made when the precision of the acceleration sensor or the yaw rate sensor as the internal sensor 161 may be reduced because of a factor other than an abnormality. That is, a comparison can be made between the first physical quantity and the third physical quantity when it is not appropriate to use the second physical quantity for comparison. When the target vehicle 100b travels outdoors in the evening or in the night, for example, the comparison unit 230d may execute a process of determining whether the first difference is equal to or less than the first criterion value. This allows a comparison between the first physical quantity and the second physical quantity to be made when the precision in detecting the vehicle 100b using an image captured by a camera as the external sensor 301 may be reduced. That is, a comparison can be made between the first physical quantity and the second physical quantity when it is not appropriate to use the third physical quantity for comparison. The process to be executed by the comparison unit 230d may be determined according to the purpose of the inspection process and whether it is appropriate to use the physical quantities for comparison, for example.

### E. Fifth Embodiment

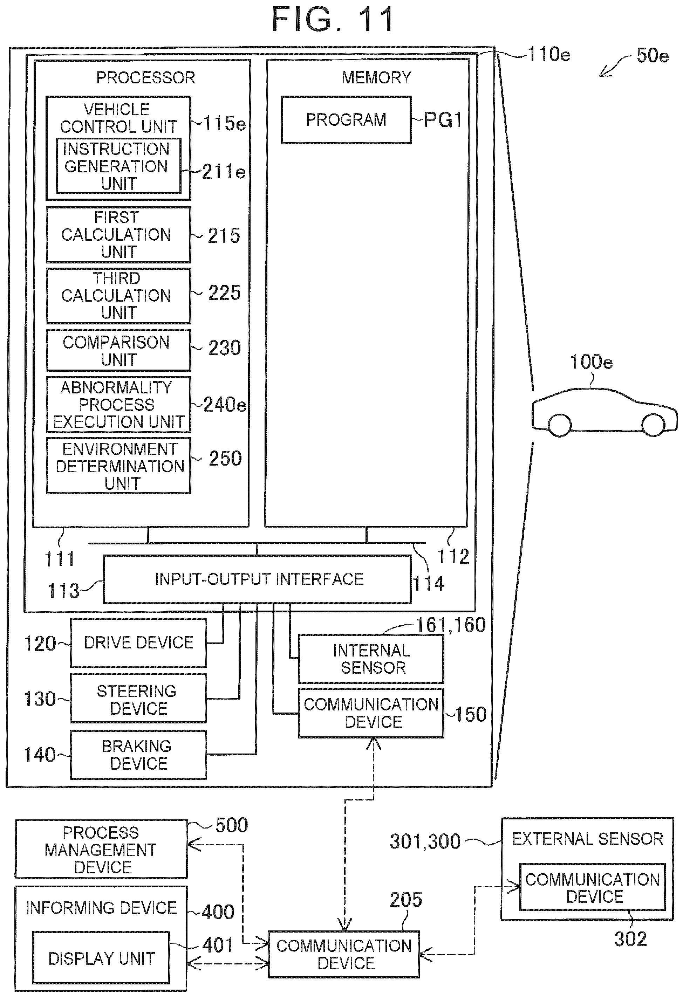

FIG. 11 illustrates the configuration of an inspection system 50e according to a fifth embodiment. The inspection system 50e according to the present embodiment does not include the server device 200, unlike the first embodiment. In the present embodiment, the inspection location DP illustrated in FIG. 2A is a location for performing an inspection related to braking operation of a vehicle 100f through autonomous inspection. Of the components of the inspection system 50e and the vehicle 100e according to the fifth embodiment, portions not particularly described are the same as those according to the first embodiment.

In the present embodiment, the communication device 150 of the vehicle 100e can communicate with the external sensor group 300, the informing device 400, and the process management device 500 through wireless communication. The processor 111 of a vehicle control device 110e functions as a vehicle control unit 115e, a first calculation unit 215, a third calculation unit 225, a comparison unit 230, an abnormality process execution unit 240, and an environment determination unit 250 by executing a computer program PG1 stored in advance in the memory 112. The vehicle control unit 115e includes an instruction generation unit 211e.

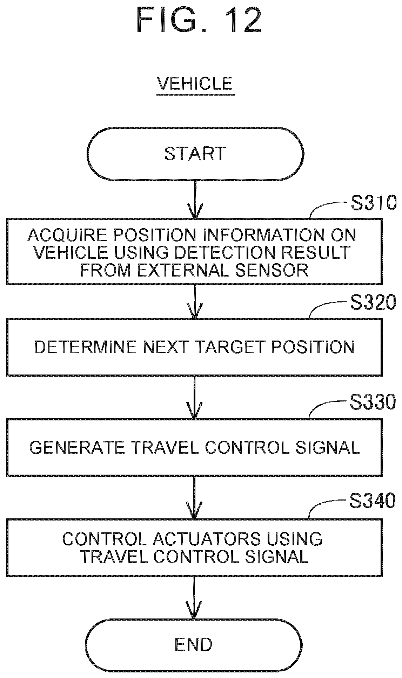

FIG. 12 is a flowchart of an unattended operation process according to the present embodiment. In S310, the vehicle control unit 115e acquires position information on the vehicle 100e using the result of a detection output from the external sensor 301. In S320, the vehicle control unit 115e determines a target position for which the vehicle 100e should be bound next. In the present embodiment, a reference path is stored in advance in the memory 112. In S230, the vehicle control unit 115e generates a travel control signal for causing the vehicle 100e to travel toward the determined target position. In S240, the vehicle control unit 115e causes the vehicle 100e to travel with the acceleration and the steering angle represented by the travel control signal by controlling the actuator group using the generated travel control signal. The vehicle control unit 115e acquires position information on the vehicle 100e, determines a target position, generates a travel control signal, and controls the actuator group repeatedly in predetermined cycles. With the inspection system 50e according to the present embodiment, the vehicle 100e can be caused to travel through autonomous control for the vehicle 100e even if the vehicle 100e is not remotely controlled from the outside.

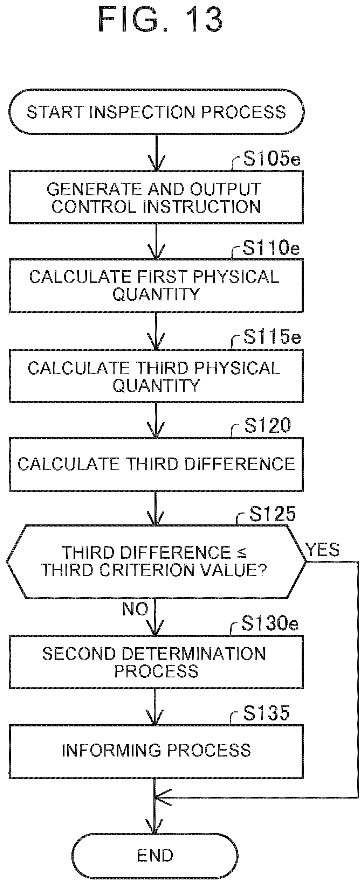

FIG. 13 is a flowchart of an inspection process for implementing an inspection method according to the fifth embodiment. In FIG. 13, steps that are similar to those in FIG. 3 are given the same reference numerals as those in FIG. 3. The inspection process illustrated in FIG. 13 is executed by the vehicle control device 110e. In the present embodiment, the target vehicle 100e means the vehicle 100e that executes the inspection process itself.

In S105e in FIG. 13, the vehicle control unit 115e causes the instruction generation unit 211e to generate and output a control instruction. Specifically, in S105e, the vehicle control unit 115e achieves the target operation by generating a control instruction and causing the actuator group of the vehicle 100e to operate according to the generated control instruction. The target operation according to the present embodiment is braking operation, as in the first embodiment. In S110e, the first calculation unit 215 of the vehicle control device 110e calculates a first physical quantity. In S110e, the first physical quantity is calculated as in S105 in FIG. 3, for example. In S115e, the third calculation unit 225 of the vehicle control device 110e calculates a third physical quantity. In S115e, the third physical quantity is calculated as in S115 in FIG. 3, for example.

When the third difference is more than the third criterion value in S125, an abnormality process execution unit 240e of the vehicle control device 110e executes an abnormality process in S130e and S135. Specifically, in S130e according to the present embodiment, the abnormality process execution unit 240e executes, as the abnormality process, a second determination process of determining that there is an abnormality with at least one of the surrounding environment, the target vehicle 100e, and the external sensor 301. In S135 according to the present embodiment, the abnormality process execution unit 240e executes an informing process as the abnormality process, substantially as in the first embodiment.

In the present embodiment, when the third difference is more than the third criterion value, examples of the abnormality of the target vehicle 100e include an assembly failure in an actuator group, an abnormality in a network in the vehicle 100e (e.g. a wire break and a contact failure), an abnormality in a function of the first calculation unit 215, and an abnormality in a value stored in the memory 112 to be used to calculate a first physical quantity.

In the present embodiment, when the second condition is met, the abnormality process execution unit 240e determines in S130e that there is an abnormality with at least one of the target vehicle 100e and the external sensor 301. The second condition according to the fifth embodiment is a condition that is similar to the second condition according to the first embodiment, for example. When the third condition is met, the abnormality process execution unit 240e determines in S130e that there is an abnormality with at least one of the surrounding environment and the external sensor 301. The third condition according to the fifth embodiment is a condition that is similar to the third condition according to the first embodiment, for example. When the fifth condition is met, the abnormality process execution unit 240e determines in S130e that there is an abnormality with at least one of the surrounding environment and the target vehicle 100e. The fifth condition according to the fifth embodiment is a condition that is similar to the fifth condition according to the first embodiment, for example.

When the second condition and the third condition, among the above conditions, are met, for example, the abnormality process execution unit 240e determines in S130e that there is an abnormality with the external sensor 301. When the third condition and the fifth condition are met, for example, the abnormality process execution unit 240e determines in S130e that there is an abnormality with the surrounding environment. When the second condition and the fifth condition are met, for example, the abnormality process execution unit 240e determines in S130e that there is an abnormality with the target vehicle 100e. In this case, executing an inspection process for the target vehicle 100e corresponds to appropriately performing an autonomous inspection on the target vehicle 100e using the external sensor 301 in a state in which it is less probable that there is an abnormality with the surrounding environment or the external sensor 301. Further, determining that there is an abnormality with the target vehicle 100e in the inspection process corresponds to discovering an abnormality of the target vehicle 100e in the autonomous inspection.

Also with the inspection system 50e according to the present embodiment described above, the abnormality process is executed when the third difference is more than the third criterion value, and thus it is possible to enhance the possibility that the inspection system 50e appropriately inspects the vehicle 100e, substantially as in the first embodiment. In particular, in the present embodiment, the abnormality process execution unit 240e executes, as the abnormality process, a second determination process of determining that there is an abnormality with at least one of the surrounding environment, the target vehicle 100e, and the external sensor 301. Thus, it is possible to specify that there is an abnormality with at least one of the surrounding environment, the target vehicle 100e, and the external sensor 301 when the third difference is more than the third criterion value.

In the present embodiment, when the second condition is met and the third difference is more than the third criterion value, the abnormality process execution unit 240e executes a process of determining that there is an abnormality with at least one of the target vehicle 100e and the external sensor 301. Thus, it is possible to specify that there is an abnormality with at least one of the target vehicle 100e and the external sensor 301 when it is less probable that there is an abnormality with the surrounding environment and the third difference is more than the third criterion value.

In the present embodiment, when the third condition is met and the third difference is more than the third criterion value, the abnormality process execution unit 240e executes a process of determining that there is an abnormality with at least one of the surrounding environment and the external sensor 301. Thus, it is possible to specify that there is an abnormality with at least one of the surrounding environment and the external sensor 301 when it is less probable that there is an abnormality with the target vehicle 100e and the third difference is more than the third criterion value.

In the present embodiment, when the fifth condition is met and the third difference is more than the third criterion value, the abnormality process execution unit 240e executes a process of determining that there is an abnormality with at least one of the surrounding environment and the target vehicle 100e. Thus, it is possible to specify that there is an abnormality with at least one of the surrounding environment and the target vehicle 100e when it is less probable that there is an abnormality with the external sensor 301 and the third difference is more than the third criterion value.

### F. Sixth Embodiment

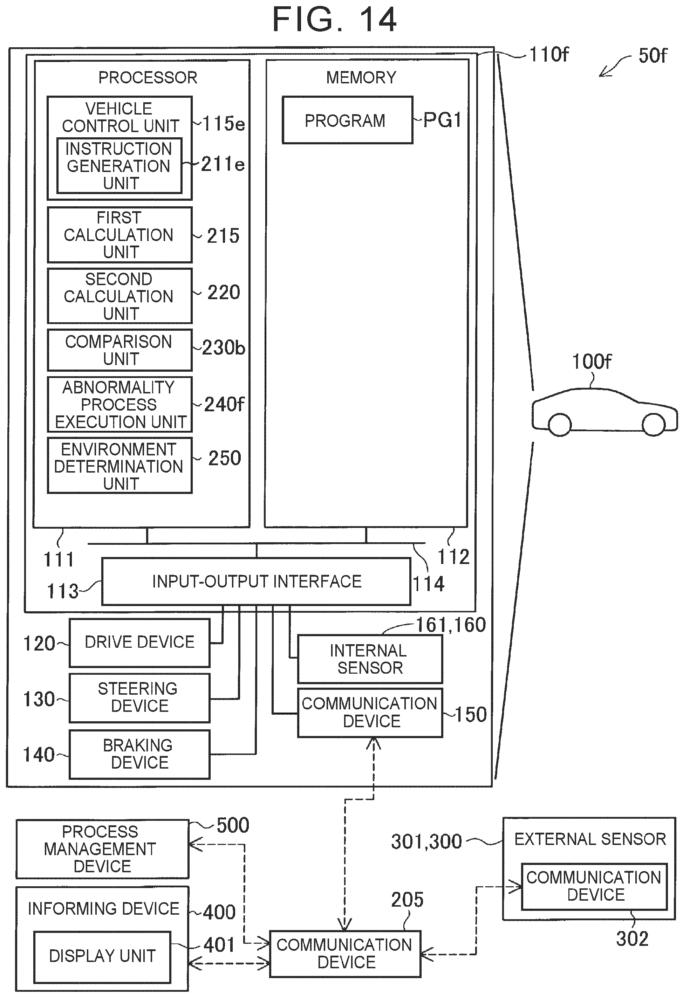

FIG. 14 illustrates the configuration of an inspection system 50f according to a sixth embodiment. Unlike the fifth embodiment, the inspection system 50f does not include the third calculation unit 225, but includes a second calculation unit 220. Specifically, in the present embodiment, the processor 111 of a vehicle control device 110f provided in a vehicle 100f functions as a vehicle control unit 115e, a first calculation unit 215, a second calculation unit 220, a comparison unit 230b, an abnormality process execution unit 240f, and an environment determination unit 250 by executing a computer program PG1. Also in the present embodiment, the unattended operation process in FIG. 12 is executed, as in the fifth embodiment. Of the components of the inspection system 50f and the vehicle 100f according to the sixth embodiment, portions not particularly described are the same as those according to the fifth embodiment.

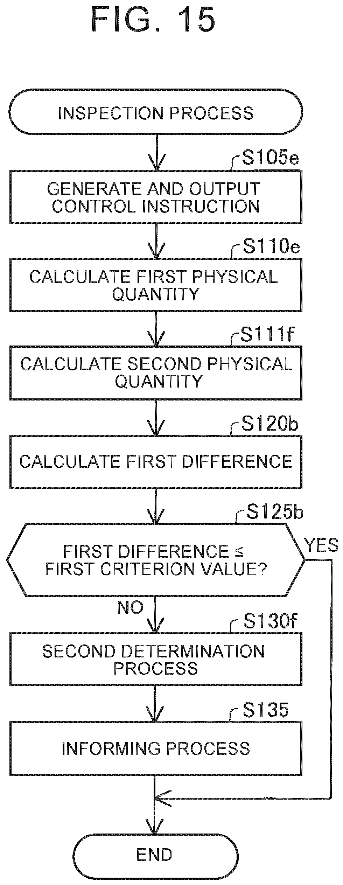

FIG. 15 is a flowchart of an inspection process for implementing an inspection method according to the sixth embodiment. In FIG. 15, steps that are similar to those in FIGS. 5 and 13 are given the same reference numerals as those in FIGS. 5 and 13. The inspection process illustrated in FIG. 15 is executed by the vehicle control device 110f.

In S111f, the second calculation unit 220 of the vehicle control device 110f calculates a second physical quantity. In S111f, the second physical quantity is calculated substantially as in S111 in FIG. 5, for example. When the first difference is more than the first criterion value in S125b in FIG. 15, the abnormality process execution unit 240f executes an abnormality process in S130f and S135. In S130f, the abnormality process execution unit 240f executes, as a second determination process, a process of determining that there is an abnormality with at least one of the surrounding environment and the target vehicle 100f.

In the present embodiment, when the first difference is more than the first criterion value, examples of the abnormality of the target vehicle 100f include an abnormality in the target internal sensor 161, in addition to the examples of the abnormality for the case where the third difference is more than the third criterion value described in relation to the fifth embodiment.

In the present embodiment, when the second condition is met, the abnormality process execution unit 240f determines in S130f that there is an abnormality with the target vehicle 100f. In this case, executing an inspection process for the target vehicle 100f corresponds to appropriately executing an autonomous inspection on the target vehicle 100f using the internal sensor 161 in a state in which it is less probable that there is an abnormality with the surrounding environment. Further, determining that there is an abnormality with the target vehicle 100f in the inspection process corresponds to discovering an abnormality of the target vehicle 100f in the autonomous inspection. The second condition according to the sixth embodiment is a condition that is similar to the second condition according to the first embodiment, for example. When the third condition is met, the abnormality process execution unit 240f determines in S130f that there is an abnormality with the surrounding environment. The third condition according to the sixth embodiment is a condition that is similar to the third condition according to the first embodiment, for example.

Also with the inspection system 50f according to the present embodiment described above, the abnormality process is executed when the first difference is more than the first criterion value, and thus it is possible to enhance the possibility that the inspection system 50f appropriately inspects the vehicle 100f, substantially as in the second embodiment. In particular, in the present embodiment, the abnormality process execution unit 240f executes, as the abnormality process, a process of determining that there is an abnormality with at least one of the surrounding environment and the target vehicle 100f. Thus, it is possible to specify that there is an abnormality with at least one of the surrounding environment and the target vehicle 100f when the first difference is more than the first criterion value.

In the present embodiment, when the second condition is met and the first difference is more than the first criterion value, the abnormality process execution unit 240f executes a process of determining that there is an abnormality with the target vehicle 100f. Thus, it is possible to specify that there is an abnormality with the target vehicle 100f when it is less probable that there is an abnormality with the surrounding environment and the first difference is more than the first criterion value.

In the present embodiment, when the third condition is met and the first difference is more than the first criterion value, the abnormality process execution unit 240f executes a process of determining that there is an abnormality with the surrounding environment. Thus, it is possible to specify that there is an abnormality with the surrounding environment when it is less probable that there is an abnormality with the target vehicle 100f and the first difference is more than the first criterion value.

### G. Seventh Embodiment

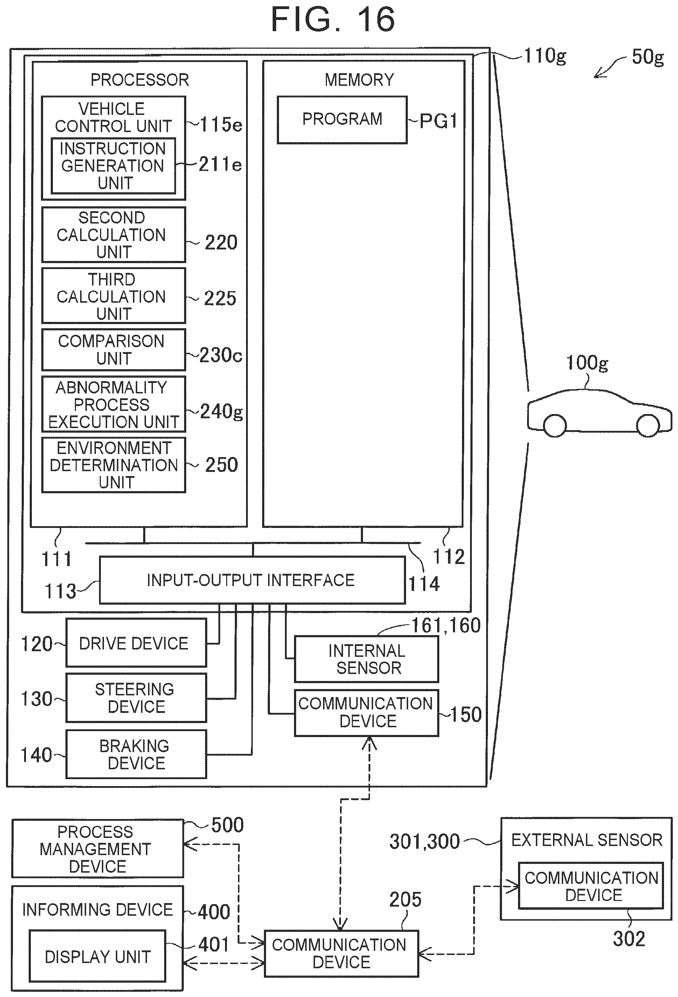

FIG. 16 illustrates the configuration of an inspection system 50g according to a seventh embodiment. Unlike the fifth embodiment, the inspection system 50g does not include the first calculation unit 215, but includes a second calculation unit 220. Specifically, in the present embodiment, the processor 111 of a vehicle control device 110g provided in a vehicle 100g functions as a vehicle control unit 115e, a second calculation unit 220, a third calculation unit 225, a comparison unit 230c, an abnormality process execution unit 240g, and an environment determination unit 250 by executing a computer program PG1. Also in the present embodiment, the unattended operation process in FIG. 12 is executed, as in the fifth embodiment. Of the components of the inspection system 50g and the vehicle 100g according to the seventh embodiment, portions not particularly described are the same as those according to the fifth embodiment.

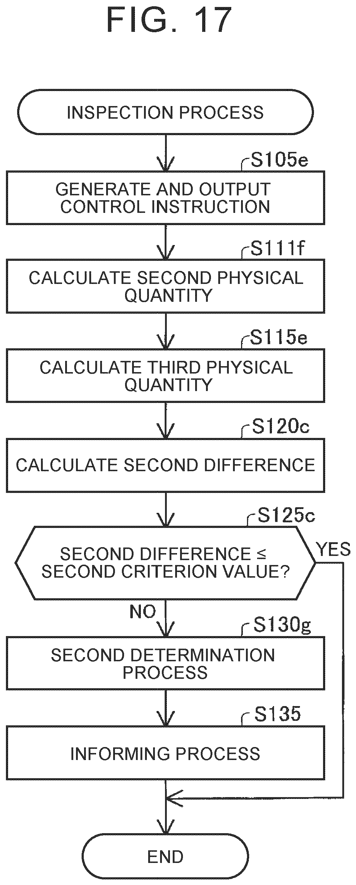

FIG. 17 is a flowchart of an inspection process for implementing an inspection method according to the seventh embodiment. In FIG. 17, steps that are similar to those in FIGS. 7, 13, and 15 are given the same reference numerals as those in FIGS. 7, 13, and 15.

When the second difference is more than the second criterion value in S125c in FIG. 17, the abnormality process execution unit 240g executes an abnormality process in S130g and S135. In S130g, the abnormality process execution unit 240g executes, as a second determination process, a process of determining that there is an abnormality with at least one of the target internal sensor 161 and the target external sensor 301.

In the present embodiment, when the fourth condition is met, the abnormality process execution unit 240g determines in S130g that there is an abnormality with the target external sensor 301. The fourth condition according to the seventh embodiment is a condition that is similar to the fourth condition according to the third embodiment, for example. When the fifth condition is met, the abnormality process execution unit 240g determines in S135g that there is an abnormality with the target internal sensor 161. In this case, executing an inspection process for the target vehicle 100g corresponds to appropriately executing an autonomous inspection on the target internal sensor 161 using the external sensor 301 in a state in which it is less probable that there is an abnormality with the external sensor 301. Further, determining that there is an abnormality with the internal sensor 161 in the inspection process corresponds to discovering an abnormality of the internal sensor 161 in the autonomous inspection. The fifth condition according to the seventh embodiment is a condition that is similar to the fifth condition according to the first embodiment, for example.

With the inspection system 50g according to the seventh embodiment described above, the abnormality process is executed when the second difference is more than the second criterion value, and thus it is possible to enhance the possibility that the inspection system 50g appropriately inspects the vehicle 100g, substantially as in the third embodiment. In particular, in the present embodiment, the abnormality process execution unit 240g executes, as the abnormality process, a process of determining that there is an abnormality with at least one of the target internal sensor 161 and the target external sensor 301. Thus, it is possible to specify that there is an abnormality with at least one of the target internal sensor 161 and the target external sensor 301 when the second difference is more than the second criterion value.

In the present embodiment, when the fourth condition is met and the second difference is more than the second criterion value, the abnormality process execution unit 240g executes a process of determining that there is an abnormality with the target external sensor 301. Thus, it is possible to specify that there is an abnormality with the target external sensor 301 when it is less probable that there is an abnormality with the target internal sensor 161 and the second difference is more than the second criterion value.

In the present embodiment, when the fifth condition is met and the second difference is more than the second criterion value, the abnormality process execution unit 240g executes a process of determining that there is an abnormality with the target internal sensor 161. Thus, it is possible to specify that there is an abnormality with the target internal sensor 161 when it is less probable that there is an abnormality with the target external sensor 301 and the second difference is more than the second criterion value.

### H. Eighth Embodiment

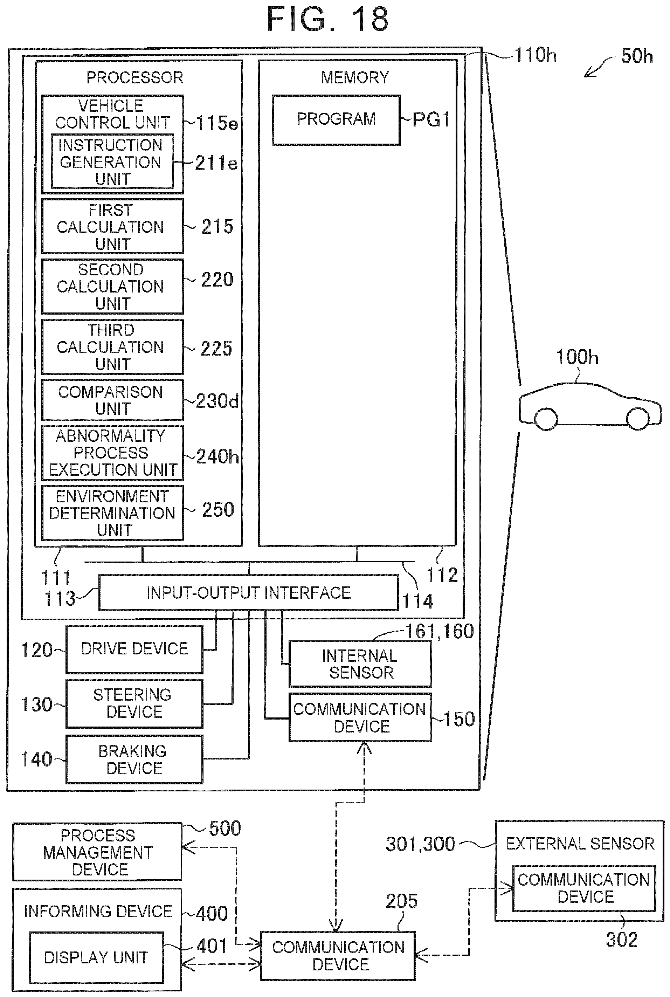

FIG. 18 illustrates the configuration of an inspection system 50h according to an eighth embodiment. Unlike the fifth embodiment, the inspection system 50h includes a second calculation unit 220, in addition to the first calculation unit 215 and the third calculation unit 225. Specifically, in the present embodiment, the processor 111 of a vehicle control device 110h provided in a vehicle 100h functions as a vehicle control unit 115e, a first calculation unit 215, a second calculation unit 220, a third calculation unit 225, a comparison unit 230d, an abnormality process execution unit 240h, and an environment determination unit 250 by executing a computer program PG1. Also in the present embodiment, the unattended operation process in FIG. 12 is executed, as in the fifth embodiment. Of the components of the inspection system 50h and the vehicle 100h according to the eighth embodiment, portions not particularly described are the same as those according to the fifth embodiment.

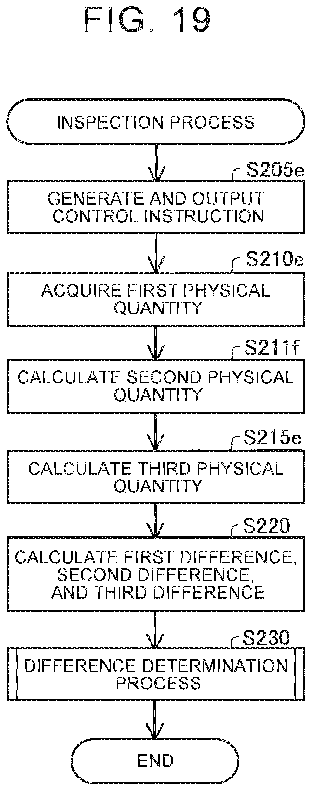

FIG. 19 is a flowchart of an inspection process for implementing an inspection method according to the eighth embodiment. In FIG. 19, steps that are similar to those in FIG. 9 are given the same reference numerals as those in FIG. 9.

S205e, S210e, S211f, and S215e are the same as S105e, S110e, S111f, and S115e, respectively, in FIGS. 13 and 15.

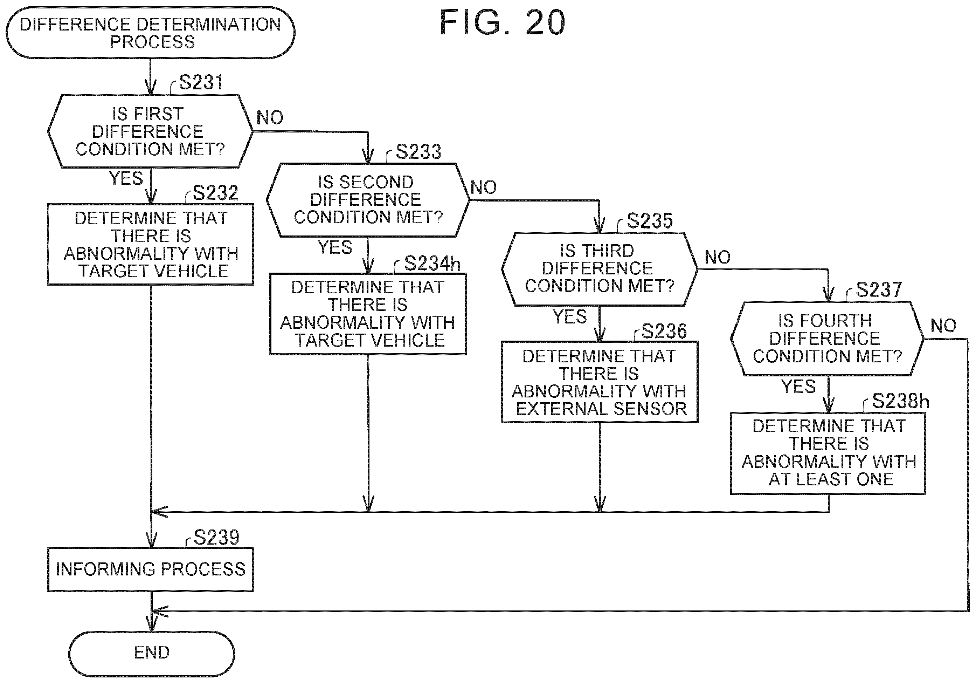

FIG. 20 is a flowchart of the difference determination process executed in S230 in FIG. 19. In FIG. 20, steps that are similar to those in FIG. 10 are given the same reference numerals as those in FIG. 10. When the first difference condition is met in S231 in FIG. 20, there is a high possibility that the first physical quantity and the third physical quantity, of the physical quantities calculated, are appropriate, and that the second physical quantity is not appropriate. Thus, in this case, it is less probable that there is an abnormality with the surrounding environment or the external sensor 301, and it is highly probable that there is an abnormality with the target vehicle 100h. In particular, in this case, the third difference is equal to or less than the third criterion value, and thus it is less probable that there is an abnormality related to the achievement of the target operation by the target vehicle 100h, and it is highly probable that there is an abnormality with the target internal sensor 161. When the first difference condition is met in S231, the abnormality process execution unit 240h executes, as the abnormality process, a process of determining that there is an abnormality with the target vehicle 100h in S232. In this case, executing an inspection process for the target vehicle 100h corresponds to appropriately executing an autonomous inspection on the target vehicle 100h using the external sensor 301 in a state in which it is less probable that there is an abnormality with the surrounding environment or the external sensor 301. Further, determining that there is an abnormality with the target vehicle 100h in the inspection process corresponds to discovering an abnormality of the target vehicle 100h in the autonomous inspection.

When the second difference condition is met in S233, there is a high possibility that the second physical quantity and the third physical quantity, of the physical quantities calculated, are appropriate, and that the first physical quantity is not appropriate. Thus, in this case, it is less probable that there is an abnormality with the surrounding environment or the external sensor 301, and it is highly probable that there is an abnormality with the target vehicle 100h. In particular, in this case, it is highly probable that there is an abnormality with a function of the first calculation unit 215 or a value stored in the memory 112 to be used to calculate a first physical quantity in the vehicle control device 110h. When the second difference condition is met in S233, the abnormality process execution unit 240h executes, as the abnormality process, a process of determining that there is an abnormality with the target vehicle 100h in S234h.

When the second difference condition is not met in S233, the comparison unit 230d determines whether the third difference condition is met in S235, substantially as in S235 in FIG. 10. When the third difference condition is met, there is a high possibility that the first physical quantity and the second physical quantity, of the physical quantities calculated, are appropriate, and that the third physical quantity is not appropriate. Thus, in this case, it is less probable that there is an abnormality with the surrounding environment or the target vehicle 100h, and it is highly probable that there is an abnormality with the target external sensor 301. When the third difference condition is met in S235, the abnormality process execution unit 240h executes, as the abnormality process, a process of determining that there is an abnormality with the external sensor 301 in S236.

When the third difference condition is not met in S235, the comparison unit 230d determines whether a fourth difference condition is met in S237, substantially as in S237 in FIG. 10. When the fourth difference condition is met in S237, the abnormality process execution unit 240h executes, as the abnormality process, a process of determining that there is an abnormality with at least one of the surrounding environment, the target vehicle 100h, and the target external sensor 301 in S238h.

When the fourth difference condition is met in S237, the abnormality process execution unit 240h executes, as the abnormality process, a process of determining that there is an abnormality with at least one of the surrounding environment, the target vehicle 100h, and the target external sensor 301 in S238h.

With the inspection system 50h according to the eighth embodiment described above, the abnormality process execution unit 240h executes a process of determining that there is an abnormality with the target vehicle 100h when the first difference condition or the second difference condition is met, and executes a process of determining that there is an abnormality with the external sensor 301 when the third difference condition is met. Thus, it is possible to specify which of the target vehicle 100h and the external sensor 301 there is an abnormality with, using the first difference, the second difference, and the third difference.

### I. Other Embodiments

(II) While the abnormality process includes the determination process and the informing process in the above first to fourth embodiments, the abnormality process may include other processes in addition to or in place of such processes. For example, the abnormality process may include a first braking process of transmitting a braking instruction for braking the target vehicle 100 from the server device 200 to the target vehicle 100, a first stopping process of stopping the server device 200, and a second stopping process of stopping the target external sensor 301. The abnormality process preferably includes at least one of the determination process, the informing process, the first braking process, the first stopping process, and the second stopping process. With the first braking process, it is possible to execute a process for eliminating an abnormality and perform work for eliminating an abnormality in a state in which it is highly probable that there is an abnormality with the server device 200, the surrounding environment, the target vehicle 100, or the external sensor 301 and in which the target vehicle 100 is braked. With the first stopping process, it is possible to eliminate a state in which it is highly probable that there is an abnormality with the server device 200 by restarting the server device 200 or inspecting or repairing the server device 200 with the server device 200 stopped, for example. With the second stopping process, it is possible to eliminate a state in which it is highly probable that there is an abnormality with the target external sensor 301 by restarting the target external sensor 301 or inspecting or repairing the external sensor 301 with the external sensor 301 stopped, for example.

(I2) In the above fifth to eighth embodiments, the abnormality process may include other processes in addition to or in place of the second determination process and the informing process. For example, the abnormality process may include a second braking process of outputting a control instruction for braking the target vehicle 100 or the second stopping process. In the fifth to eighth embodiments, the abnormality process preferably includes at least one of the second determination process, the informing process, the second braking process, and the second stopping process. With the second braking process, it is possible to execute a process for eliminating an abnormality and perform work for eliminating an abnormality in a state in which it is highly probable that there is an abnormality with the surrounding environment, the target vehicle 100, or the external sensor 301 and in which the target vehicle 100 is braked.

(I3) In the above embodiments, it is not necessary that the abnormality process execution unit 240 should narrow down the target with which it is determined that there is an abnormality according to each of the first to fifth conditions in the determination process. In this case, it is not necessary to set the first condition, the second condition, the third condition, the fourth condition, or the fifth condition.

(I4) In the above embodiments, a reception unit that receives the first operation, a reception unit that receives the second operation, a reception unit that receives the third operation, a reception unit that receives the fourth operation, and a reception unit that receives the fifth operation may be partly or completely different. It is not necessary that the reception units should be provided in the informing device 400, and the reception units may be provided in the vehicle 100, the server device 200, the external sensor 301, or the process management device 500, or may be provided in a control device that is separate from such devices, for example. The operations such as the first operation may be any type of operation, such as an operation by a hand or a finger of a user, a voice operation, or a gesture operation, for example. When the first operation etc. is a gesture operation, an external sensor 301 configured to be able to detect such a gesture may be caused to function as a reception unit.

(I5) In the above embodiments, an external sensor 301 for unattended operation is used as the environment sensor. On the contrary, an external sensor 301 not for unattended operation, an internal sensor 161 of various types, or a sensor that is separate from the external sensor 301 or the internal sensor 161, for example, may be used as the environment sensor. It is not necessary that the environment determination unit 250 should be provided in the server device 200 or the vehicle 100, and the environment determination unit 250 may be provided in the external sensor 301, the informing device 400, or the process management device 500, or may be provided in a control device that is separate from such devices, for example.

(I6) While an external sensor for unattended operation is used as the target external sensor 301 in the above embodiments, an external sensor that is different from the external sensor for unattended operation may also be used.

(I7) In the above embodiments, the external sensor 301 is a camera. On the contrary, the external sensor 301 may be a LiDAR. In this case, sensor information output from the external sensor 301 is point cloud data, rather than captured images. In this case, the remote control unit 210 and the vehicle control unit 115 may acquire position information on the vehicle 100 using the point cloud data. For example, the remote control unit 210 and the vehicle control unit 115 may acquire the position and the orientation of the vehicle 100 by executing template matching using acquired point cloud data and reference point cloud data prepared in advance. A variety of algorithms such as iterative closest point (ICP) and normal distributions transform (NDT) can be used for the template matching. When the external sensor group 300 includes a camera and a LiDAR as the external sensor 301, captured images and point cloud data may be fused through a fusion process to be used, for example. When the external sensor 301 is constituted as a LiDAR, examples of the disturbance as the abnormality of the external sensor 301 include foreign matter such as a leaf from a tree, a spider web, and dust adhering to a window portion of the LiDAR.

(I8) In the above first to fourth embodiments, it is not necessary that the first calculation unit 215 and the third calculation unit 225 should be provided in the server device 200, and the first calculation unit 215 and the third calculation unit 225 may be provided in the vehicle 100, the external sensor 301, the informing device 400, the process management device 500, or a terminal device that is separate from such devices, for example. When the first calculation unit 215 is provided in a device that is external to the server device 200, it is only necessary that the device including the first calculation unit 215 should be configured to receive information for calculating a first physical quantity, that is, information corresponding to a control instruction for achieving the target operation, directly or indirectly from the server device 200. Substantially similarly, when the third calculation unit 225 is provided in a device that is external to the external sensor 301, it is only necessary that the device including the third calculation unit 225 should be configured to receive information for calculating a third physical quantity, that is, information corresponding to the result of a detection by the external sensor 301, directly or indirectly from the external sensor 301. It is not necessary that the second calculation unit 220 should be provided in the vehicle 100, and the second calculation unit 220 may be provided in the server device 200, the external sensor 301, the informing device 400, the process management device 500, or a terminal device that is separate from such devices, for example. In this case, it is only necessary that the device including the second calculation unit 220 should be configured to receive a value for calculating a second physical quantity, that is, a value detected by the internal sensor 161, directly or indirectly from the vehicle 100.

(I9) In the above fifth to eighth embodiments, it is not necessary that the first calculation unit 215, the second calculation unit 220, and the third calculation unit 225 should be provided in the vehicle 100, and the first calculation unit 215, the second calculation unit 220, and the third calculation unit 225 may be provided in the external sensor 301, the informing device 400, the process management device 500, or a terminal device that is separate from such devices, for example. In the fifth to eighth embodiments, when the first calculation unit 215 is provided in a device that is external to the vehicle 100, it is only necessary that the device including the first calculation unit 215 should be configured to receive information for calculating a first physical quantity, that is, information corresponding to a control instruction for achieving the target operation, directly or indirectly from the vehicle 100.

(I10) While the target operation is braking operation in the above embodiments, the target operation may be operation other than the braking operation. For example, the target operation may be turning operation to turn the vehicle 100 with a predetermined radius of curvature, or may be acceleration operation to accelerate the vehicle 100 at a predetermined acceleration to a predetermined speed. When the target operation is turning operation, a remote inspection or an autonomous inspection can be performed on turning operation of the vehicle 100 using the inspection process. Specifically, a remote inspection or an autonomous inspection can be performed on the steering device 130 or the internal sensor 161 related to turning operation (e.g. a yaw rate sensor or an acceleration sensor). In this case, the first to third physical quantities can be calculated as the radius of curvature of turning operation, for example. When the target operation is acceleration operation, a remote inspection or an autonomous inspection can be performed on acceleration operation of the vehicle 100 using the inspection process. Specifically, a remote inspection or an autonomous inspection can be performed on the drive device 120 or the internal sensor 161 related to acceleration operation (e.g. an acceleration sensor or a vehicle speed sensor). In this case, the first to third physical quantities can be calculated as a physical quantity related to acceleration performance such as a travel distance or a travel time required for the vehicle 100 to reach a predetermined speed through acceleration operation, for example. The target operation may be operation that does not involve movement of the vehicle 100, and may be operation to swing a wiper provided in the vehicle 100, operation to open and close a door mirror, operation to open and close a power window, and operation to turn on various lamps, for example. When the target operation is operation that does not involve movement of the vehicle 100, it is not necessary that the server device 200 should move the vehicle 100 through remote control. In this case, a control device that moves the vehicle 100 through remote control may be provided separately from the server device 200, or the vehicle 100 may be configured to be movable through autonomous control, for example. When the target operation is operation that does not involve movement of the vehicle 100, it is not necessary that the control instruction should include a travel control signal. In this case, the control instruction preferably includes at least one of a signal for achieving the target operation and generation information that is information for generating such a signal. The generation information is information that determines the timing to start or end the target operation or the intensity of the target operation, for example. Even when the target operation is operation that involves movement of the vehicle 100, the control instruction may include generation information for generating a travel control signal, in addition to or in place of a travel control signal for achieving the target operation. The generation information for generating a travel control signal can be position information, a path, or a target position, for example.

(I11) In the above first to fourth embodiments, the server device 200 executes processes from acquiring position information on the vehicle 100 to generating a travel control signal. On the contrary, the vehicle 100 may execute at least a part of the processes from acquiring position information on the vehicle 100 to generating a travel control signal. For example, the following aspects (1) to (3) may be used.
(1) The server device 200 may acquire position information on the vehicle 100, determine a target position for which the vehicle 100 should be bound next, and generate a path from a present location of the vehicle 100 represented by the acquired position information to the target position. The server device 200 may generate a path to the target position between the present location and a destination location, or may generate a path to the destination location. The server device 200 may transmit the generated path to the vehicle 100. The vehicle 100 may generate a travel control signal such that the vehicle 100 travels on the path received from the server device 200, and control the actuator group using the generated travel control signal.
(2) The server device 200 may acquire position information on the vehicle 100, and transmit the acquired position information to the vehicle 100. The vehicle 100 may determine a target position for which the vehicle 100 should be bound next, generate a path from a present location of the vehicle 100 represented by the received position information to the target position, generate a travel control signal such that the vehicle 100 travels on the generated path, and control the actuator group using the generated travel control signal.
(3) In the above aspects (1) and (2), a detection result output from the internal sensor 161 mounted on the vehicle 100 may be used as the sensor information in at least one of the generation of a path and the generation of a travel control signal. Examples of the internal sensor 161 may include a camera, a LiDAR, a millimeter wave radar, an ultrasonic sensor, a Global Positioning System (GPS) sensor, an acceleration sensor, a gyro sensor, and a yaw rate sensor. For example, in the above aspect (1), the server device 200 may acquire a detection result from the internal sensor 161 and reflect the detection result from the internal sensor 161 in a path when generating a path. In the above aspect (1), the vehicle 100 may acquire a detection result from the internal sensor 161 and reflect the detection result from the internal sensor 161 in a travel control signal when generating a travel control signal. In the above aspect (2), the vehicle 100 may acquire a detection result from the internal sensor 161 and reflect the detection result from the internal sensor 161 in a path when generating a path. In the above aspect (2), the vehicle 100 may acquire a detection result from the internal sensor 161 and reflect the detection result from the internal sensor 161 in a travel control signal when generating a travel control signal.

(I12) In the above fifth to eighth embodiments, a detection result output from the internal sensor 161 mounted on the vehicle 100 may be used in at least one of the generation of a path and the generation of a travel control signal. For example, the vehicle 100 may acquire a detection result from the internal sensor 161 and reflect the detection result from the internal sensor 161 in a path when generating a path. The vehicle 100 may acquire a detection result from the internal sensor 161 and reflect the detection result from the internal sensor 161 in a travel control signal when generating a travel control signal.

(I13) In the above fifth to eighth embodiments, the vehicle 100 acquires position information on the vehicle 100 using a detection result from the external sensor 301. On the contrary, the vehicle 100 may acquire position information using a detection result from the internal sensor 161 mounted on the vehicle 100, determine a target position for which the vehicle 100 should be bound next, generate a path from a present location of the vehicle 100 represented by the acquired position information to the target position, generate a travel control signal for traveling along the generated path, and control the actuator group using the generated travel control signal. In this case, the vehicle 100 can travel without using a detection result from the external sensor 301 at all. In this case, it is not necessary that the inspection system 50 should include the external sensor 301. Also in this case, the inspection system 50 can calculate a first physical quantity and a second physical quantity, and make a comparison between the first physical quantity and the second physical quantity. The vehicle 100 may acquire a target arrival time and traffic congestion information from the outside of the vehicle 100, and have the target arrival time or the traffic congestion information reflected in at least one of a path and a travel control signal. All the functional components of the inspection system 50 may be provided in the vehicle 100. That is, the processes implemented by the inspection system 50 described in relation to the present disclosure may be implemented by the vehicle 100 alone.

(I14) In the above first embodiment, the server device 200 automatically generates a travel control signal to be transmitted to the vehicle 100. Additionally or alternatively, the server device 200 may generate a travel control signal according to a manual operation by an operator positioned outside the vehicle 100. For example, the operator may operate a manipulation device that includes a display that displays an image output from the external sensor 301, a steering wheel, an accelerator pedal, and a brake pedal that are used to remotely operate the vehicle 100, and a communication device that communicates with the server device 200 through wired communication or wireless communication, and the server device 200 may generate a travel control signal according to an operation performed on the manipulation device.

(I15) In the above embodiments, it is only necessary that the vehicle 100 should include components that enable movement through unattended operation, and the vehicle 100 may be in the form of a platform that includes the following components. Specifically, it is only necessary that the vehicle 100 should include at least a vehicle control device 110 and an actuator group in order to implement three functions including "traveling", "turning", and "stopping" through unattended operation. In order for the vehicle 100 to acquire information from the outside for unattended operation, it is only necessary that the vehicle 100 should further include a communication device 150. That is, at least a part of interior parts such as a seat or a dashboard may not be mounted to the vehicle 100 that is movable through unattended operation, at least a part of exterior parts such as a bumper or a fender may not be mounted to the vehicle 100, or a body shell may not be mounted to the vehicle 100. In this case, the remaining parts such as a body shell may be mounted to the vehicle 100 before the vehicle 100 is shipped from the factory FC, or the remaining parts such as a body shell may be mounted the vehicle 100 after the vehicle 100 is shipped from the factory FC without the remaining parts such as a body shell mounted to the vehicle 100. The parts may be mounted to the vehicle 100 from any direction, including the upper side, the lower side, the front side, the rear side, the right side, and the left side, and may be mounted from the same direction or from different directions. Also when the vehicle 100 is in the form of a platform, a position is determined as with the vehicle 100 according to the above embodiments.

(I16) In the above embodiments, the vehicle 100 may be manufactured by combining a plurality of modules. The modules each mean a unit composed of a plurality of parts grouped according to the area or the function in the vehicle 100. For example, the platform of the vehicle 100 may be manufactured by combining a front module that constitutes a front part of the platform, a center module that constitutes a center part of the platform, and a rear module that constitutes a rear part of the platform. The number of modules that constitute the platform is not limited to three, and may be two or less or four or more. The modules may include a part that constitutes a portion of the vehicle 100 that is different from the platform, in addition to or in place of the parts that constitute the platform. The various modules may include any exterior part such as a bumper or a grille, or any interior part such as a seat or a console. Not only the vehicle 100 but also mobile bodies in any aspect may be manufactured by combining a plurality of modules. Such modules may be manufactured by joining a plurality of parts by welding, using a fixture, etc., or may be manufactured by integrally molding at least a part of parts that constitute a module as a single part by casting, for example. The method of integrally molding a single part, in particular a relatively large part, is called gigacasting or megacasting. For example, the front module, the center module, and the rear module described above may be manufactured by gigacasting.

(I17) Conveying the vehicle 100 using travel of the vehicle 100 through unattended operation is called "self-propelled conveyance". The configuration for implementing the self-propelled conveyance is called a "vehicle remote control autonomous travel conveyance system". The method of producing the vehicle 100 using the self-propelled conveyance is called "self-propelled production". In the self-propelled production, at least a part of conveyance of the vehicle 100 in a factory that manufactures the vehicle 100 is implemented through self-propelled conveyance.

The present disclosure is not limited to the above embodiments, and can be implemented by a variety of configurations without departing from the scope of the invention as defined in the claims. For example, the technical features in each embodiment corresponding to the technical features in each aspect described in "SUMMARY OF THE INVENTION" can be replaced or combined as appropriate in order to solve some or all of the above issues or achieve some or all of the above effects. When the technical features are not described as essential in the present specification, such technical features can be omitted as appropriate.

## Claims

1. An inspection system (50) of remotely or autonomously inspecting a mobile body (100) that is movable through unattended operation, the inspection system (50) comprising:
a processor (201), wherein
the processor (201) is configured to:
generate and output a control instruction that causes the mobile body (100) to operate; and
execute an abnormality process determined in advance in a case where a difference obtained by comparing at least two of physical quantities for the mobile body (100) as a target is more than a criterion value determined in advance, the physical quantities including (i) a first physical quantity related to operation of the mobile body (100) achieved according to the control instruction, the first physical quantity being calculated using the control instruction, (ii) a second physical quantity related to the operation, calculated using a result of a detection by an internal sensor (161) mounted on the mobile body (100), and (iii) a third physical quantity related to the operation, calculated using a result of a detection by an external sensor (301) positioned outside the mobile body (100).

2. The inspection system (50) according to claim 1, further comprising a server device (200) including the processor(201) and configured to transmit the control instruction to the mobile body (100) from outside of the mobile body (100), wherein the abnormality process includes at least one of:
a process of determining that there is an abnormality with at least one of the server device (200), a surrounding environment of the mobile body (100) that performs the operation, the mobile body (100) as the target, and the external sensor (301);
a process of indicating occurrence of the abnormality;
a process of transmitting the control instruction of braking the mobile body (100) as the target from the server device (200) to the mobile body (100) as the target;
a process of stopping the server device (200); and
a process of stopping the external sensor (301).

3. The inspection system (50) according to claim 2, wherein the processor (201) is configured to execute, as the abnormality process, a process of determining that there is an abnormality with at least one of the server device (200), the surrounding environment, and the mobile body (100) as the target, in a case where a first difference is more than a first criterion value determined in advance, the first difference being a difference between the first physical quantity and the second physical quantity compared with each other for the mobile body (100) as the target.

4. The inspection system (50) according to claim 3, wherein the processor (201) is configured to determine that there is an abnormality with at least one of the surrounding environment and the mobile body (100) as the target in a case where a first condition determined in advance related to normality of the server device (200) is met and the first difference is more than the first criterion value.

5. The inspection system (50) according to claim 4, wherein the first condition includes a condition that in a predetermined period a first number of times, when the first difference for a plurality of mobile bodies that are different from the mobile body (100) as the target is more than the first criterion value, is equal to or less than a predetermined number of times.

6. The inspection system (50) according to claim 4, wherein the first condition includes a condition that a first operation determined in advance, which excludes the server device (200) from targets for an abnormality determination, is executed on a reception unit (90) configured to receive an operation from a user.

7. The inspection system (50) according to claim 3, wherein
the processor (201) is configured to determine that there is an abnormality with at least one of the server device (200) and the mobile body (100) as the target in a case where a second condition determined in advance related to normality of the surrounding environment is met and the first difference is more than the first criterion value, and
the second condition includes:
a condition that a second operation determined in advance, which excludes the surrounding environment from targets for an abnormality determination, is executed on a reception unit (90) configured to receive an operation from a user, and
a condition that the processor (201) made determination that there is no abnormality with the surrounding environment by using a sensor that detects the surrounding environment.

8. The inspection system (50) according to claim 3, wherein
the processor (201) is configured to determine that there is an abnormality with at least one of the server device (200) and the surrounding environment in a case where a third condition determined in advance related to normality of the mobile body (100) as the target is met and the first difference is more than the first criterion value, and
the third condition includes a condition that a third operation determined in advance, which excludes the mobile body (100) as the target from targets for an abnormality determination, is executed on a reception unit (90) configured to receive an operation from a user.

9. The inspection system (50) according to claim 2, wherein the processor (201) is configured to execute, as the abnormality process, a process of determining that there is an abnormality with at least one of the internal sensor (161) mounted on the mobile body (100) as the target and the external sensor (301) in a case where a second difference is more than a second criterion value determined in advance, the second difference being a difference between the second physical quantity and the third physical quantity compared with each other.

10. The inspection system (50) according to claim 9, wherein
the processor (201) is configured to determine that there is an abnormality with the external sensor (301) in a case where a fourth condition determined in advance related to normality of the internal sensor (161) mounted on the mobile body (100) as the target is met and the second difference is more than the second criterion value, and
the fourth condition includes a condition that a fourth operation determined in advance, which excludes the internal sensor (161) from targets for an abnormality determination, is executed on a reception unit (90) configured to receive an operation from a user.

11. The inspection system (50) according to claim 10, wherein
the processor (201) determines that there is an abnormality with the internal sensor (161) in a case where a fifth condition determined in advance related to normality of the external sensor (301) is met and the second difference is more than the second criterion value, and
the fifth condition includes a condition that a fifth determined in advance, which excludes the external sensor (301) from targets for an abnormality determination, is executed on a reception unit (90) configured to receive an operation from a user.

12. The inspection system (50) according to claim 2, wherein the processor(201) is configured to execute, as the abnormality process, a process of determining that there is an abnormality with at least one of the server device (200), the surrounding environment, the mobile body (100) as the target, and the external sensor (301) in a case where a third difference is more than a third criterion value determined in advance, the third difference being a difference between the first physical quantity and the third physical quantity compared with each other.

13. The inspection system (50) according to claim 12, wherein
the processor (201) is configured to determine that there is an abnormality with at least one of the surrounding environment, the external sensor (301), and the mobile body (100) as the target in a case where a first condition determined in advance related to normality of the server device (200) is met and the third difference is more than the third criterion value, and
the first condition includes a condition that a first operation determined in advance, which excludes the server device (200) from targets for an abnormality determination, is executed on a reception unit (90) configured to receive an operation from a user.

14. A server device (200) of remotely or autonomously inspecting a mobile body (100) that is movable through unattended operation, the server device (200) comprising:
a processor (201), wherein
the processor (201) is configured to:
generate a control instruction that causes the mobile body (100) to operate, and transmit the control instruction to the mobile body (100) from outside of the mobile body (100); and
execute an abnormality process determined in advance in a case where a difference obtained by comparing at least two of physical quantities for the mobile body (100) as a target is more than a criterion value determined in advance, the physical quantities including (i) a first physical quantity related to operation of the mobile body (100) achieved according to the control instruction, the first physical quantity being calculated using the control instruction, (ii) a second physical quantity related to the operation, calculated using a result of a detection by an internal sensor (161) mounted on the mobile body (100) to detect a state of the mobile body (100), and (iii) a third physical quantity related to the operation, calculated using a result of a detection by an external sensor (301) positioned outside the mobile body (100).

15. A computer-implemented inspection method of remotely or autonomously inspecting a mobile body (100) that is movable through unattended operation, the inspection method comprising:
generating and outputting a control instruction that causes the mobile body (100) as a target to operate; and
executing an abnormality process determined in advance in a case where a difference obtained by comparing at least two of physical quantities for the mobile body (100) as the target is more than a criterion value determined in advance, the physical quantities including (i) a first physical quantity related to operation of the mobile body (100) executed according to the control instruction, the first physical quantity being calculated using the control instruction, (ii) a second physical quantity related to the operation, calculated using a result of a detection by an internal sensor (161) mounted on the mobile body (100) to detect a state of the mobile body (100) from inside of the mobile body (100), and (iii) a third physical quantity related to the operation, calculated using a result of a detection by an external sensor (301) positioned outside the mobile body (100).

## Patentansprüche

1. Prüfsystem (50) zur ferngesteuerten oder autonomen Prüfung eines beweglichen Körpers (100), der im unbeaufsichtigten Betrieb bewegbar ist, wobei das Prüfsystem (50) umfasst:
einen Prozessor (201), wobei
der Prozessor (201) für Folgendes konfiguriert ist:
Erzeugen und Ausgeben einer Steueranweisung, die den mobilen Körper (100) zum Betrieb veranlasst; und
Ausführen eines vorab bestimmten Fehlerablaufs, falls eine Differenz, die durch den Vergleich von mindestens zwei physikalischen Größen des mobilen Körpers (100) als Ziel bestimmt wird, größer ist als ein vorab bestimmter Schwellenwert, wobei die physikalischen Größen Folgendes enthalten: (i) eine erste physikalische Größe, die sich auf den gemäß dem Steuerbefehl erreichten Betrieb des mobilen Körpers (100) bezieht, wobei die erste physikalische Größe unter Verwendung des Steuerbefehls berechnet wird, (ii) eine zweite physikalische Größe, die sich auf den Betrieb bezieht und anhand eines Ergebnisses einer Erfassung durch einen am mobilen Körper (100) angebrachten internen Sensor (161) berechnet wird, und (iii) eine dritte physikalische Größe, die sich auf den Betrieb bezieht und anhand eines Ergebnisses einer Erfassung durch einen außerhalb des mobilen Körpers (100) positionierten externen Sensor (301) berechnet wird.

2. Prüfsystem (50) nach Anspruch 1, das ferner eine Servervorrichtung (200) enthält, die den Prozessor (201) enthält und so konfiguriert ist, dass sie die Steueranweisung von außerhalb des mobilen Körpers (100) an den mobilen Körper (100) überträgt, wobei der Anomalieprozess mindestens eines der Folgenden enthält:
einen Prozess zum Bestimmen, dass eine Anomalie bei mindestens einem der Folgenden vorliegt: der Servervorrichtung (200), einer Umgebung des mobilen Körpers (100), in der der Prozess durchgeführt wird, dem mobilen Körper (100) als Ziel und dem externen Sensor (301);
einen Prozess zum Anzeigen des Auftretens der Störung;
einen Prozess zum Übertragen des Steuerbefehls zum Abbremsen des mobilen Körpers (100) als Ziel von der Servervorrichtung (200) an den mobilen Körper (100) als Ziel;
einen Prozess zum Anhalten der Servervorrichtung (200); und
einen Prozess zum Anhalten des externen Sensors (301).

3. Prüfsystem (50) nach Anspruch 2, wobei der Prozessor (201) so konfiguriert ist, dass er als Anomalieprozess einen Prozess ausführt, mit dem bestimmt wird, dass bei mindestens einem der Folgenden eine Anomalie vorliegt: der Servervorrichtung (200), der Umgebung und dem mobilen Körper (100) als Ziel, in einem Fall, in dem eine erste Differenz größer ist als ein vorab bestimmter erster Kriteriumwert, wobei die erste Differenz eine Differenz zwischen der ersten physikalischen Größe und der zweiten physikalischen Größe ist, die für den mobilen Körper (100) als Ziel miteinander verglichen werden.

4. Prüfsystem (50) nach Anspruch 3, wobei der Prozessor (201) so konfiguriert ist, dass er bestimmt, dass eine Anomalie bei mindestens einem der Umgebung oder dem mobilen Körper (100) als Ziel vorliegt, in einem Fall, in dem eine vorab festgelegte erste Bedingung bezüglich der Normalität der Servervorrichtung (200) erfüllt ist und die erste Differenz größer ist als der erste Kriteriumwert.

5. Prüfsystem (50) nach Anspruch 4, wobei die erste Bedingung eine Bedingung enthält, dass in einem vorbestimmten Zeitraum eine erste Anzahl von Malen, wenn die erste Differenz für eine Vielzahl von mobilen Objekten, die sich von dem mobilen Objekt (100) als Ziel unterscheiden, größer als der erste Kriteriumswert ist, gleich oder kleiner als eine vorbestimmte Anzahl von Malen ist.

6. Prüfsystem (50) nach Anspruch 4, wobei die erste Bedingung eine Bedingung enthält, dass ein im Voraus bestimmter erster Prozess, der die Servervorrichtung (200) aus den Zielen für eine Anomalieermittlung ausschließt, auf einer Empfangseinheit (90) ausgeführt wird, die so konfiguriert ist, dass sie einen Prozess von einem Benutzer empfängt.

7. Prüfsystem (50) nach Anspruch 3, wobei
der Prozessor (201) so konfiguriert ist, dass er bestimmt, dass bei mindestens einem der Servervorrichtung (200) und dem mobilen Körper (100) als Ziel eine Anomalie vorliegt, in einem Fall, in dem eine im Voraus festgelegte zweite Bedingung bezüglich der Normalität der Umgebung erfüllt ist und die erste Abweichung größer ist als der erste Kriteriumwert, und
die zweite Bedingung Folgendes enthält:
eine Bedingung, dass ein im Voraus festgelegter zweiter Prozess, der die Umgebung aus den Zielen für eine Anomalieermittlung ausschließt, auf einer Empfangseinheit (90) ausgeführt wird, die so konfiguriert ist, dass sie einen Prozess von einem Benutzer empfängt, und
eine Bedingung, dass der Prozessor (201) unter Verwendung eines Sensors, der die Umgebung erfasst, bestimmt hat, dass in der Umgebung keine Anomalie vorliegt.

8. Prüfsystem (50) nach Anspruch 3, wobei
der Prozessor (201) so konfiguriert ist, dass er bestimmt, dass bei mindestens einem der Servervorrichtung (200) und der Umgebung eine Anomalie vorliegt, in einem Fall, in dem eine im Voraus festgelegte dritte Bedingung bezüglich der Normalität des mobilen Körpers (100) als Ziel erfüllt ist und die erste Differenz größer ist als der erste Kriteriumwert, und
die dritte Bedingung eine Bedingung enthält, dass ein im Voraus bestimmter dritter Prozess, der den beweglichen Körper (100) als Ziel aus den Zielen für eine Anomalieermittlung ausschließt, auf einer Empfangseinheit (90) ausgeführt wird, die zum Empfangen eines Befehls von einem Benutzer konfiguriert ist.

9. Prüfsystem (50) nach Anspruch 2, wobei der Prozessor (201) so konfiguriert ist, dass er als Anomalieprozess einen Prozess ausführt, bei dem bestimmt wird, dass bei mindestens einem der am beweglichen Körper (100) als Ziel montierten internen Sensoren (161) und dem externen Sensor (301) eine Anomalie vorliegt, in einem Fall, in dem eine zweite Differenz größer ist als ein im Voraus festgelegter zweiter Kriteriumwert, wobei die zweite Differenz eine Differenz zwischen der zweiten physikalischen Größe und der dritten physikalischen Größe im Vergleich zueinander ist.

10. Prüfsystem (50) nach Anspruch 9, wobei
der Prozessor (201) dafür konfiguriert ist, eine Anomalie beim externen Sensor (301) zu bestimmen, falls eine vierte, im Voraus bestimmte Bedingung bezüglich der Normalität des am Mobilkörper (100) als Ziel montierten internen Sensors (161) erfüllt ist und die zweite Differenz größer als der zweite Kriteriumwert ist, und
die vierte Bedingung eine Bedingung enthält, dass ein im Voraus bestimmter vierter Prozess, der den internen Sensor (161) aus den Zielen für eine Anomalieermittlung ausschließt, auf einer Empfangseinheit (90) ausgeführt wird, die so konfiguriert ist, dass sie einen Prozess von einem Benutzer empfängt.

11. Prüfsystem (50) nach Anspruch 10, wobei
der Prozessor (201) bestimmt, dass eine Anomalie beim internen Sensor (161) vorliegt, in einem Fall, in dem eine fünfte, im Voraus bestimmte Bedingung bezüglich der Normalität des externen Sensors (301) erfüllt ist und die zweite Differenz größer als der zweite Kriteriumswert ist, und
die fünfte Bedingung eine Bedingung enthält, dass ein fünfter, im Voraus bestimmter Prozess, der den externen Sensor (301) aus den Zielen für eine Anomalieerfassung ausschließt, auf einer Empfangseinheit (90) ausgeführt wird, die zum Empfangen eines Befehls von einem Benutzer konfiguriert ist.

12. Prüfsystem (50) nach Anspruch 2, wobei der Prozessor (201) so konfiguriert ist, dass er als Anomalieprozess einen Prozess ausführt, bei dem bestimmt wird, dass eine Anomalie bei mindestens einem der folgenden Ziele vorliegt: der Servervorrichtung (200), der Umgebung, dem mobilen Körper (100) als Ziel und dem externen Sensor (301), in einem Fall, in dem eine dritte Differenz größer ist als ein im Voraus festgelegter dritter Kriteriumwert, wobei die dritte Differenz eine Differenz zwischen der ersten physikalischen Größe und der dritten physikalischen Größe im Vergleich zueinander ist.

13. Prüfsystem (50) nach Anspruch 12, wobei
der Prozessor (201) so konfiguriert ist, dass er bestimmt, dass bei mindestens einem der Folgenden eine Anomalie vorliegt: der Umgebung, dem externen Sensor (301) und dem mobilen Körper (100) als Ziel, in einem Fall, in dem eine vorab festgelegte erste Bedingung bezüglich der Normalität der Servervorrichtung (200) erfüllt ist und die dritte Differenz größer ist als der dritte Kriteriumwert, und
die erste Bedingung eine Bedingung enthält, dass ein erster, im Voraus bestimmter Betrieb, der die Servervorrichtung (200) aus den Zielen für eine Anomalieerfassung ausschließt, auf einer Empfangseinheit (90) ausgeführt wird, die zum Empfangen eines Befehls von einem Benutzer konfiguriert ist.

14. Prüfsystem (200) zur ferngesteuerten oder autonomen Prüfung eines beweglichen Körpers (100), der im unbeaufsichtigten Betrieb bewegbar ist, wobei das Prüfsystem (200) umfasst:
einen Prozessor (201), wobei
der Prozessor (201) für Folgendes konfiguriert ist:
Erzeugen einer Steueranweisung, die den mobilen Körper (100) zum Betrieb veranlasst, und die Steueranweisung von außerhalb des mobilen Körpers (100) an den mobilen Körper (100) überträgt; und
Ausführen eines vorab bestimmten Fehlerablaufs, falls eine Differenz, die durch den Vergleich von mindestens zwei physikalischen Größen des mobilen Körpers (100) als Ziel bestimmt wird, größer ist als ein vorab bestimmter Schwellenwert, wobei die physikalischen Größen Folgendes enthalten: (i) eine erste physikalische Größe, die sich auf den gemäß dem Steuerbefehl erreichten Betrieb des mobilen Körpers (100) bezieht, wobei die erste physikalische Größe unter Verwendung des Steuerbefehls berechnet wird, (ii) eine zweite physikalische Größe, die sich auf den Betrieb bezieht und anhand eines Ergebnisses einer Erfassung durch einen am mobilen Körper (100) angebrachten internen Sensor (161) zur Erfassung eines Zustands des mobilen Körpers (100) berechnet wird, und (iii) eine dritte physikalische Größe, die sich auf den Betrieb bezieht und anhand eines Ergebnisses einer Erfassung durch einen außerhalb des mobilen Körpers (100) positionierten externen Sensor (301) berechnet wird.

15. Computerimplementiertes Prüfverfahren zur ferngesteuerten oder autonomen Prüfung eines mobilen Körpers (100), der durch unbeaufsichtigten Betrieb bewegbar ist, wobei das Prüfverfahren Folgendes umfasst:
Erzeugen und Ausgeben eines Steuerbefehls, der bewirkt, dass der mobile Körper (100) als Ziel einen Prozess ausführt; und
Ausführen eines vorab bestimmten Fehlerablaufs, falls eine Differenz, die durch den Vergleich von mindestens zwei physikalischen Größen des mobilen Körpers (100) als Ziel bestimmt wird, größer ist als ein vorab bestimmter Schwellenwert, wobei die physikalischen Größen Folgendes enthalten: (i) eine erste physikalische Größe, die sich auf den gemäß dem Steuerbefehl ausgeführten Betrieb des mobilen Körpers (100) bezieht, wobei die erste physikalische Größe unter Verwendung des Steuerbefehls berechnet wird, (ii) eine zweite physikalische Größe, die sich auf den Betrieb bezieht und anhand eines Ergebnisses einer Erfassung durch einen am mobilen Körper (100) angebrachten internen Sensor (161) berechnet wird, um einen Zustand des mobilen Körpers (100) von innerhalb des mobilen Körpers (100) zu erfassen, und (iii) eine dritte physikalische Größe, die sich auf den Betrieb bezieht und anhand eines Ergebnisses einer Erfassung durch einen außerhalb des mobilen Körpers (100) positionierten externen Sensor (301) berechnet wird.

## Revendications

1. Système d'inspection (50) destiné à inspecter à distance ou de manière autonome un corps mobile (100) pouvant se déplacer en mode sans surveillance, le système d'inspection (50) comprenant :
un processeur (201) ;
ledit processeur (201) est conçu pour :
générer et émettre une instruction de commande qui actionne le corps mobile (100), et
exécuter un processus ayant trait à une anomalie, déterminé à l'avance, si une différence obtenue par comparaison d'au moins deux quantités physiques du corps mobile (100) pris en tant que cible est supérieure à une valeur de critère déterminée à l'avance, les quantités physiques comprenant : (i) une première quantité physique liée à l'action du corps mobile (100) obtenue selon l'instruction de commande, la première quantité physique étant calculée à l'aide de l'instruction de commande, (ii) une deuxième quantité physique liée à l'action, calculée à l'aide du résultat d'une détection réalisée par un capteur intérieur (161) monté sur le corps mobile (100), et (iii) une troisième quantité physique liée à l'action, calculée à l'aide du résultat d'une détection réalisée par un capteur extérieur (301) situé à l'extérieur du corps mobile (100).

2. Système d'inspection (50) selon la revendication 1, comprenant en outre un dispositif serveur (200) comprenant le processeur (201) et conçu pour transmettre l'instruction de commande au corps mobile (100) depuis l'extérieur du corps mobile (100), le processus ayant trait à une anomalie comprenant au moins un des processus suivants :
un processus consistant à déterminer qu'il existe une anomalie concernant le dispositif serveur (200), l'environnement du corps mobile (100) qui réalise l'action, le corps mobile (100) en tant que cible et/ou le capteur extérieur (301),
un processus consistant à signaler la survenue de l'anomalie,
un processus consistant à transmettre, à partir du dispositif serveur (200) et à destination du corps mobile (100) en tant que cible, l'instruction de commande visant à freiner le corps mobile (100) en tant que cible,
un processus consistant à arrêter le dispositif serveur (200), et
un processus consistant à arrêter le capteur extérieur (301).

3. Système d'inspection (50) selon la revendication 2, dans lequel le processeur (201) est conçu pour exécuter, en tant que processus ayant trait à une anomalie, un processus consistant à déterminer qu'il existe une anomalie concernant le dispositif serveur (200), l'environnement et/ou le corps mobile (100) en tant que cible, si une première différence est supérieure à une première valeur de critère déterminée à l'avance, la première différence étant une différence entre la première quantité physique et la deuxième quantité physique comparées l'une à l'autre eu égard au corps mobile (100) en tant que cible.

4. Système d'inspection (50) selon la revendication 3, dans lequel le processeur (201) est conçu pour déterminer qu'il existe une anomalie concernant l'environnement et/ou le corps mobile (100) en tant que cible si une première condition déterminée à l'avance, liée à la normalité du dispositif serveur (200), est satisfaite et si la première différence est supérieure à la première valeur de critère.

5. Système d'inspection (50) selon la revendication 4, dans lequel la première condition comprend une condition selon laquelle, au cours d'une période prédéterminée, un premier nombre de fois où la première différence concernant une pluralité de corps mobiles autres que ledit corps mobile (100) en tant que cible est supérieure à la première valeur de critère est inférieur ou égal à un nombre prédéterminé de fois.

6. Système d'inspection (50) selon la revendication 4, dans lequel la première condition comprend une condition selon laquelle une première action déterminée à l'avance, qui exclut le dispositif serveur (200) des cibles destinées à une détermination d'anomalie, est exécutée sur une unité de réception (90) conçue pour recevoir une action réalisée par un utilisateur.

7. Système d'inspection (50) selon la revendication 3, dans lequel le processeur (201) est conçu pour déterminer qu'il existe une anomalie concernant le dispositif serveur (200) et/ou le corps mobile (100) en tant que cible si une deuxième condition déterminée à l'avance, liée à la normalité de l'environnement, est satisfaite et si la première différence est supérieure à la première valeur de critère, et
la deuxième condition comprend :
une condition selon laquelle une deuxième action déterminée à l'avance, qui exclut l'environnement des cibles destinées à une détermination d'anomalie, est exécutée sur une unité de réception (90) conçue pour recevoir une action réalisée par un utilisateur, et
une condition selon laquelle le processeur (201) a déterminé qu'il n'y avait pas d'anomalie concernant l'environnement à l'aide d'un capteur détectant l'environnement.

8. Système d'inspection (50) selon la revendication 3, dans lequel
le processeur (201) est conçu pour déterminer qu'il existe une anomalie concernant le dispositif serveur (200) et/ou l'environnement si une troisième condition déterminée à l'avance, liée à la normalité du corps mobile (100) en tant que cible, est satisfaite et si la première différence est supérieure à la première valeur de critère, et
la troisième condition comprend une condition selon laquelle une troisième action déterminée à l'avance, qui exclut le corps mobile (100) en tant que cible des cibles destinées à une détermination d'anomalie, est exécutée sur une unité de réception (90) conçue pour recevoir une action réalisée par un utilisateur.

9. Système d'inspection (50) selon la revendication 2, dans lequel le processeur (201) est conçu pour exécuter, en tant que processus ayant trait à une anomalie, un processus consistant à déterminer qu'il existe une anomalie concernant le capteur intérieur (161) monté sur le corps mobile (100) en tant que cible et/ou le capteur extérieur (301), si une deuxième différence est supérieure à une deuxième valeur de critère déterminée à l'avance, la deuxième différence étant une différence entre la deuxième quantité physique et la troisième quantité physique comparées l'une à l'autre.

10. Système d'inspection (50) selon la revendication 9, dans lequel
le processeur (201) est conçu pour déterminer qu'il existe une anomalie au niveau du capteur extérieur (301) si une quatrième condition déterminée à l'avance, liée à la normalité du capteur intérieur (161) monté sur le corps mobile (100) en tant que cible, est satisfaite et que la deuxième différence est supérieure à la deuxième valeur de critère, et
la quatrième condition comprend une condition selon laquelle une quatrième action déterminée à l'avance, qui exclut le capteur intérieur (161) des cibles destinées à une détermination d'anomalie, est exécutée sur une unité de réception (90) conçue pour recevoir une action réalisée par un utilisateur.

11. Système d'inspection (50) selon la revendication 10, dans lequel
le processeur (201) détermine qu'il existe une anomalie au niveau du capteur intérieur (161) si une cinquième condition déterminée à l'avance, liée à la normalité du capteur extérieur (301), est satisfaite et que la deuxième différence est supérieure à la deuxième valeur de critère, et
la cinquième condition comprend une condition selon laquelle une cinquième action déterminée à l'avance, qui exclut le capteur extérieur (301) en tant que cible des cibles destinées à une détermination d'anomalie, est exécutée sur une unité de réception (90) conçue pour recevoir une action réalisée par un utilisateur.

12. Système d'inspection (50) selon la revendication 2, dans lequel le processeur (201) est conçu pour exécuter, en tant que processus ayant trait à une anomalie, un processus consistant à déterminer qu'il existe une anomalie concernant le dispositif serveur (200), l'environnement, le corps mobile (100) en tant que cible et/ou le capteur extérieur (301), si une troisième différence est supérieure à une troisième valeur de critère déterminée à l'avance, la troisième différence étant une différence entre la première quantité physique et la troisième quantité physique comparées l'une à l'autre.

13. Système d'inspection (50) selon la revendication 12, dans lequel
le processeur (201) est conçu pour déterminer qu'il existe une anomalie concernant l'environnement, le capteur extérieur (301) et/ou le corps mobile (100) en tant que cible si une première condition déterminée à l'avance, liée à la normalité dispositif serveur (200), est satisfaite et si la troisième différence est supérieure à la troisième valeur de critère, et
la première condition comprend une condition selon laquelle une première action déterminée à l'avance, qui exclut le dispositif serveur (200) des cibles destinées à une détermination d'anomalie, est exécutée sur une unité de réception (90) conçue pour recevoir une action réalisée par un utilisateur.

14. Dispositif serveur (200) destiné à inspecter à distance ou de manière autonome un corps mobile (100) pouvant se déplacer en mode sans surveillance, le dispositif serveur (200) comprenant :
un processeur (201) ;
ledit processeur (201) étant conçu pour :
générer une instruction de commande qui actionne le corps mobile (100), et transmettre l'instruction de commande au corps mobile (100) à partir de l'extérieur du corps mobile (100), et
exécuter un processus ayant trait à une anomalie, déterminé à l'avance, si une différence obtenue par comparaison d'au moins deux quantités physiques du corps mobile (100) pris en tant que cible est supérieure à une valeur de critère déterminée à l'avance, les quantités physiques comprenant : (i) une première quantité physique liée à l'action du corps mobile (100) obtenue selon l'instruction de commande, la première quantité physique étant calculée à l'aide de l'instruction de commande, (ii) une deuxième quantité physique liée à l'action, calculée à l'aide du résultat d'une détection réalisée par un capteur intérieur (161) monté sur le corps mobile (100) afin de détecter un état du corps mobile (100), et (iii) une troisième quantité physique liée à l'action, calculée à l'aide du résultat d'une détection réalisée par un capteur extérieur (301) situé à l'extérieur du corps mobile (100).

15. Procédé d'inspection mis en œuvre par ordinateur, destiné à inspecter à distance ou de manière autonome un corps mobile (100) pouvant se déplacer en mode sans surveillance, le procédé d'inspection comprenant :
la génération et la transmission d'une instruction de commande qui actionne le corps mobile (100) en tant que cible, et
l'exécution d'un processus ayant trait à une anomalie, déterminé à l'avance, si une différence obtenue par comparaison d'au moins deux quantités physiques du corps mobile (100) pris en tant que cible est supérieure à une valeur de critère déterminée à l'avance, les quantités physiques comprenant : (i) une première quantité physique liée à l'action du corps mobile (100) exécutée selon l'instruction de commande, la première quantité physique étant calculée à l'aide de l'instruction de commande, (ii) une deuxième quantité physique liée à l'action, calculée à l'aide du résultat d'une détection réalisée par un capteur intérieur (161) monté sur le corps mobile (100) afin de détecter un état du corps mobile (100) à partir de l'intérieur du corps mobile (100), et (iii) une troisième quantité physique liée à l'action, calculée à l'aide du résultat d'une détection réalisée par un capteur extérieur (301) situé à l'extérieur du corps mobile (100).
